# EUROPEAN PATENT SPECIFICATION

(11) **EP 4 200 735 B1**
(45) Date of publication and mention of the grant of the patent: **11.03.2026**
(21) Application number: 20761904.0
(22) Date of filing: 19.08.2020
(51) Int. Cl.: G06F 21/60, G06N 20/00

(54) **GENERATING A MACHINE LEARNING MODEL**
ERZEUGUNG EINES MASCHINENLERNMODELLS
GÉNÉRATION D'UN MODÈLE D'APPRENTISSAGE AUTOMATIQUE

(43) Date of publication of application: 28.06.2023
(73) Proprietor: Telefonaktiebolaget LM Ericsson (publ), 164 83 Stockholm (SE); Tout, Hanine, Saint-Laurent, QC H4L 2R6 (CA); Abdul Rahman, Sawsan, Saint-Laurent, Québec H4L 2R6 (CA); Talhi, Chamseddine, Laval, Québec H7W 2Y1 (CA); Mourad, Azzam, Dam w Farez Tripoli, 1300 (LB)
(72) Inventor: NAHUM, Marcelo, Pierrefonds, Québec H8Z 3G4 (CA); SOUEIDAN, Sobhi, Québec H3P 1B8 (CA); TOUT, Hanine, Saint-Laurent, Québec H4L 2R6 (CA); ABDUL RAHMAN, Sawsan, Saint-Laurent, Québec H4L 2R6 (CA); TALHI, Chamseddine, Laval, Québec H7W 2Y1 (CA); MOURAD, Azzam, Tripoli 1300 (LB)
(74) Representative: Murgitroyd & Company
(86) International application number: PCT/IB2020/057790
(87) International publication number: WO 2022/038397

(56) References cited:
- WO-A1-2019/042571
- US-A1- 2018 240 011
- US-A1- 2019 385 043
- DHAKAL ADITYA ET AL: "NetML: An NFV Platform with Efficient Support for Machine Learning Applications", 2019 IEEE CONFERENCE ON NETWORK SOFTWARIZATION (NETSOFT), IEEE, 24 June 2019 (2019-06-24), pages 396 - 404, XP033602040, DOI: 10.1109/NETSOFT.2019.8806698

## Description

### Technical Field

The disclosure relates to methods for generating a machine learning model and entities configured to operate in accordance with that method.

### Background

The virtualization of entities in a network has become a key enabler in the fifth generation (5G) network infrastructure. The virtualization of entities is referred to in the art as network function virtualization (NFV). NFV enables service abstraction and the virtualization of computing, storage, and network resources. There are currently developments under way that are directed to the evolution of NFV into cloud-native NFV. In cloud-native NFV, applications are decomposed into microservices running inside containers. This can enable automated installation, configuration, and scaling with dynamic network requirements, in addition to enabling self-healing, and automated upgrading and updating of virtualized network functions (VNFs) in the NFV architecture. The telecommunications industry is taking advantage of this promising advancement in NFV to replace legacy telecommunications services with software-based systems that can be deployed on almost any hardware or virtual infrastructure.

However, software-based systems are becoming more and more complex, which means that debugging, monitoring, and understanding the behaviour of these systems is becoming significantly difficult. These issues are even more challenging in a virtualized environment, as an additional virtualization layer is added to the protocol stack in such an environment and thus analysing the system behaviour necessitates low-level data monitoring and analysis. While monitoring tools (such as probes) have already been developed for cloud-native systems to deal with traffic distributed between many lightweight virtualized resources, analytic tools are no less important.

Analytic tools can be used to analyse data from the network and allow an orchestration system to make more intelligent choices in real time. Pre-provisioned rules are expected to become less important over time as artificial intelligence (Al) enables smarter interpretation of data and thus a more efficient proactive reaction to be taken in response to the data. Many scenarios in an internet protocol multimedia subsystem (IMS) can leverage machine learning to improve network management. For example, machine learning can be used to predict an increased network demand (e.g. based on data external to the network, such as social media, and data indicative of historical network demand, such as the demand for dynamic reallocation of resources), dynamically adapt network coverage, predict demands in bandwidth and speed, identify and classify traffic (e.g. traffic that is subject to security attacks), anticipate violation of service level agreement (SLA) and service level objectives (SLOs) to aid operators in ensuring service resiliency and availability. These scenarios, and many other scenarios, emphasise the need for analytics to improve the network and application management of networks, such as 5G networks.

In general, analytics involves data collection, data analysis, and the translation of the data analysis results into an action. The data collection generally consists of data sets of key performance indicators (KPIs) for the infrastructure and/or applications, logs, notifications, and other sources of data that may be relevant to the scenario being analysed. The data analysis involves converting the collected data into knowledge, which can be performed by way of simple predictions based on observations, or by way of a more in-depth analysis through Al models. The data analysis results can then be translated into an action, which can be enforced in the system to allow dynamic smart decisions. Thus, analytics brings value to the operation of modern (e.g. 5G) telecommunications networks by making smarter decisions possible and by enabling automation through Al-based analytics.

The European Telecommunication Standards Institute (ETSI) NFV standards emphasise the need for monitoring, evaluating, and taking actions. Particularly, ETSI GR NFV-IFA 023 V3.1.1 discusses management policies and studies how to integrate them in the NFV management and orchestration (MANO) architecture to deal with the MANO stack lifecycle. However, there is no reference to analytics modules in this document. On the other hand, "D4.4 - Standardized Analytics Module for NFV-MANO: A-MANO", CogNet, V1.0, discloses a standardised analytics module for the NFV-MANO architecture. However, while CogNet focuses on the integration of Al-based components of data collection, machine learning-based analysis, and dynamic policy management and integration, it does not address an adopted learning architecture where the analysis component is an Al-based Blackbox, and there is no emphasis on the ML training and inference architecture. Various analysis architectures can be applied in line with the ETSI NFV and CogNet standards. However, many challenges need to be addressed in order to contribute to MANO Al-based analysis. In a large distributed system, decisions are made at different sites and levels. While some decisions can be made based on local data with low latency, other decisions can affect the system globally, such as the scenario of network anomalies detection, possible SLA violations, smart cities and many other use cases that are discussed in the standards. In such scenarios, typical challenges that exist are data location, performance, cost, time-scale consideration, and privacy.

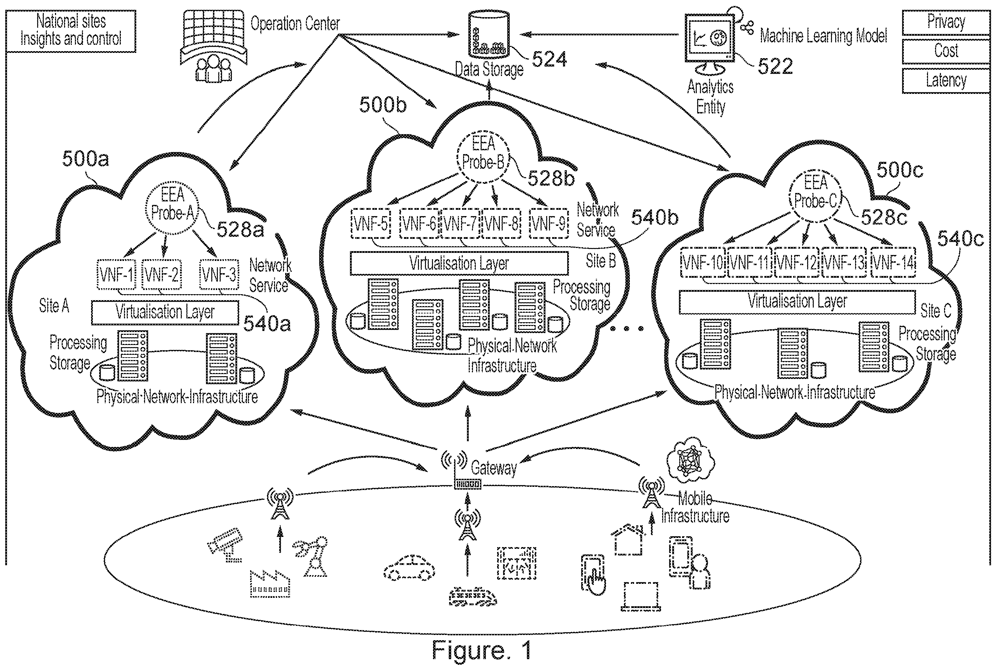

**Figure 1** is a schematic illustrating an existing network architecture. More specifically, Figure 1 illustrates an example of a smart city scenario with a centralized learning architecture. The centralized learning architecture is the most common architecture for Al-based analysis. In this centralized learning architecture, traffic at the VNFs 540a, 540b, 540c of a plurality of different sites 500a, 500b, 500c is monitored by a respective plurality of probes 528a, 528b, 528c, and data is sent to a centralized analytics entity 522 in a data center of an operator. The data may also be stored at a centralized memory 524. At the centralized analytics entity 522, a machine learning algorithm is trained, and a machine learning model is built, so that actions can be applied to improve a particular use case.

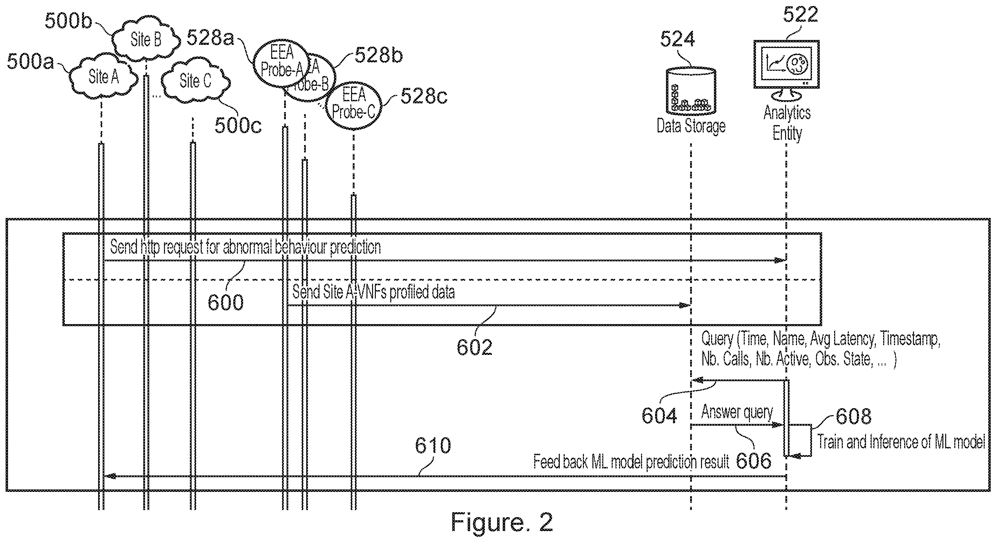

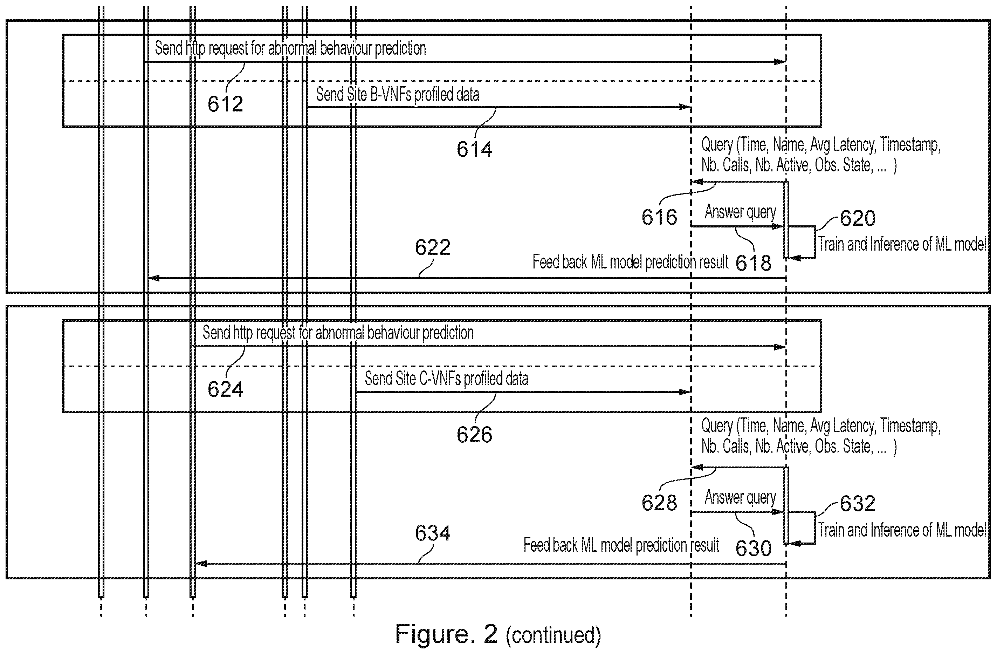

**Figure 2** is a signalling diagram illustrating an exchange of signals in the centralized learning architecture, such as that illustrated in Figure 1. As illustrated by arrow 600 of Figure 2, a request (e.g. a hypertext transfer protocol, HTTP, request) for a prediction is transmitted from a first site 500a towards the centralized analytics entity 522, which is not on site. In the illustrated example, the request is for the prediction of abnormal behaviour. A first probe 528a monitors the VNFs 540a of the first site 500a to acquire data about the VNFs 540a of the first site 500a. As illustrated by arrow 602 of Figure 2, the first probe 528a transmits the acquired data towards the centralized memory 524, which is not on site. The acquired data is stored at the centralized memory 524. The steps illustrated by arrows 600 and 602 may be executed in parallel. As illustrated by arrow 604 of Figure 2, the centralized analytics entity 522 queries the centralized memory 524 for data about the VNFs 540a of the first site 500a. As illustrated by arrow 606 of Figure 2, the centralized memory 524 transmits an answer to the query to the centralized analytics entity 522. As illustrated by arrow 608 of Figure 2, the centralized analytics entity 522 trains a machine learning model based on the data about the VNFs 540a of the first site 500a, and uses the trained machine learning model to generate a prediction, which in this example is a prediction of abnormal behaviour. As illustrated by arrow 610 of Figure 2, the centralized analytics entity 522 transmits (and thus feeds back) the machine learning model prediction towards the first site 500a.

As illustrated by arrow 612 of Figure 2, a request (e.g. a hypertext transfer protocol, HTTP, request) for a prediction is transmitted from a second site 500b towards the centralized analytics entity 522, which is not on site. In the illustrated example, the request is for the prediction of abnormal behaviour. A second probe 528b monitors the VNFs 540b of the second site 500b to acquire data about the VNFs 540b of the second site 500b. As illustrated by arrow 614 of Figure 2, the second probe 528b transmits the acquired data towards the centralized memory 524, which is not on site. The acquired data is stored at the centralized memory 524. The steps illustrated by arrows 612 and 614 may be executed in parallel. As illustrated by arrow 616 of Figure 2, the centralized analytics entity 522 queries the centralized memory 524 for data about the VNFs 540b of the second site 500b. As illustrated by arrow 618 of Figure 2, the centralized memory 524 transmits an answer to the query to the centralized analytics entity 522. As illustrated by arrow 620 of Figure 2, the centralized analytics entity 522 trains a machine learning model based on the data about the VNFs 540b of the second site 500b, and uses the trained machine learning model to generate a prediction, which in this example is a prediction of abnormal behaviour. As illustrated by arrow 622 of Figure 2, the centralized analytics entity 522 transmits (and thus feeds back) the machine learning model prediction towards the second site 500b.

As illustrated by arrow 624 of Figure 2, a request (e.g. a hypertext transfer protocol, HTTP, request) for a prediction is transmitted from a third site 500c towards the centralized analytics entity 522, which is not on site. In the illustrated example, the request is for the prediction of abnormal behaviour. A third probe 528c monitors the VNFs 540c of the third site 500c to acquire data about the VNFs 540c of the third site 500c. As illustrated by arrow 626 of Figure 2, the third probe 528c transmits the acquired data towards the centralized memory 524, which is not on site. The acquired data is stored at the centralized memory 524. The steps illustrated by arrows 624 and 626 may be executed in parallel. As illustrated by arrow 628 of Figure 2, the centralized analytics entity 522 queries the centralized memory 524 for data about the VNFs 540c of the third site 500c. As illustrated by arrow 630 of Figure 2, the centralized memory 524 transmits an answer to the query to the centralized analytics entity 522. As illustrated by arrow 632 of Figure 2, the centralized analytics entity 522 trains a machine learning model based on the data about the VNFs 540c of the third site 500c, and uses the trained machine learning model to generate a prediction, which in this example is a prediction of abnormal behaviour. As illustrated by arrow 634 of Figure 2, the centralized analytics entity 522 transmits (and thus feeds back) the machine learning model prediction towards the third site 500c.

A centralized learning architecture, such as that described with reference to Figures 1 and 2, is widely adopted in network management. For example, some existing Al-driven techniques are used to detect malfunctions in VNFs. In these techniques, the VNFs 540a, 540b, 540c are monitored and relevant data is collected at the centralized analytics entity 522 where the training process is performed. Operators can inspect a reported decision and, in case of a false positive, operators can opt to feed back the relevant data into the system for that data to be part of the next training process. This allows new trends in the VNF behaviour to be captured. There also exists a machine learning-based technique for detecting anomalies and preliminary indicators that may result in VNFs 540a, 540b, 540c not meeting SLAs. Although this technique is concerned with performing an analysis on data per virtual machine (VM), the technique still relies on data being accumulated at the centralized analytics entity 522, where training and inference processes are performed.

There are some significant drawbacks associated with adopting a centralized architecture for analysis. One critical drawback relates to 5G mobile data networks and, specifically, to the large amount of data to be transmitted over constantly connected networks, since this leads to security issues and also issues with the privacy of data. The privacy of data is threatened in respect of both the content service provider (CSP) and the consumer due to the obligation to transfer data out of the host network, from the VNFs to the centralized analytics entity. However, it is important that any application, including Al-based analysis, does not breach the privacy of users and this is particularly important in view of the General Data Protection Regulation (GDPR). Another drawback associated with adopting a centralized architecture for analysis is that this requires communicating a potentially large influx of data over the network for remote analysis, which can cause latency issues and thus slow inference. This can result in centralized Al failing to keep up with the rate at which data is generated, collected, analysed, and consumed for real-time actions, which can prove to be critical in 5G networks and applications management. Also, the centralized architecture entails high costs on the network infrastructure and high network load due to an increasingly large amount of data needing to be transferred and stored.

On the other hand, SLA violations originating from one VM can be detected from the observations of another VM. As such, without VNF knowledge sharing, a critical shortcoming arises where management policies may not be appropriately evaluated and applied. Furthermore, models can be replicated when used for detection in VMs hosting similar VNF components with the same resources. Therefore, independent analysis of VNFs hosted in different VMs can be both time and resource consuming, which means that the sharing of policy evaluation results may be needed. This is particularly the case in a multi-policy administration point (PAP) environment as each PAP is only aware of the enforcement status of policies that it creates itself. With the aim of meeting the needs of a distributed system, decentralized on-site intelligence has been advanced.

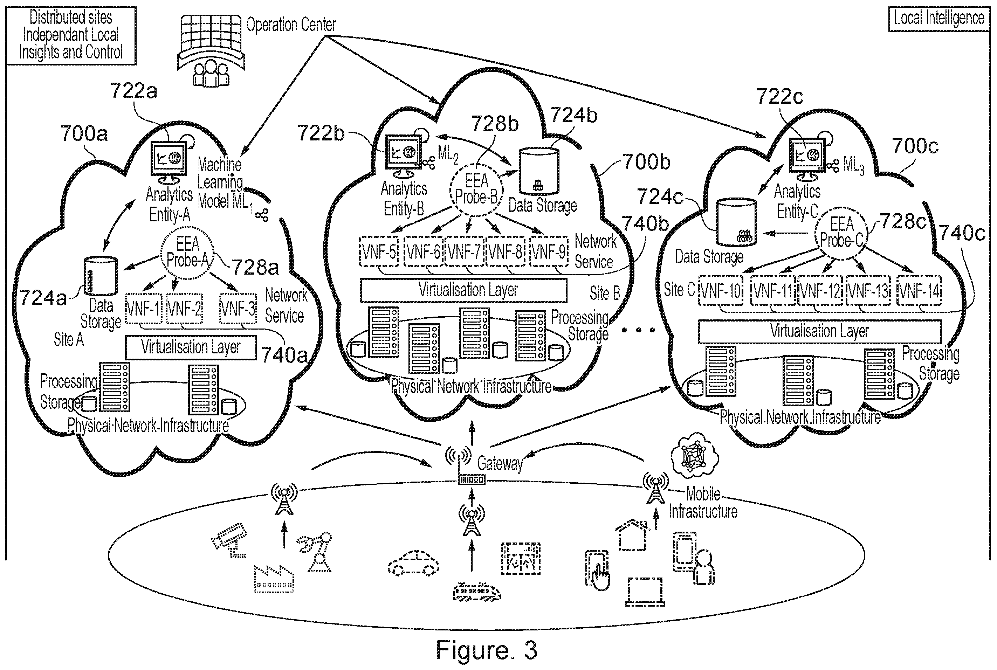

**Figure 3** is a schematic illustrating another existing network architecture. More specifically, Figure 3 illustrates an example of a smart city scenario with decentralized learning architecture. In this decentralized learning architecture, data is processed locally as it may not be economical be transfer the data to a centralized data center, or it may even be required under privacy and security rules of data transfer. In more detail, in this decentralized learning architecture, traffic at the VNFs 740a, 740b, 740c of a plurality of different sites 700a, 700b, 700c is monitored by a respective plurality of probes 728a, 728b, 728c, and data is sent to a respective plurality of local analytics entities 722a, 722b, 722c. The data may also be stored at a respective plurality of local memories 724a, 724b, 724c. At each local analytics entity 722a, 722b, 722c of the different sites 700a, 700b, 700c, a machine learning algorithm is trained, and a machine learning model is built for the respective site 700a, 700b, 700c, so that actions can be applied to improve a particular use case.

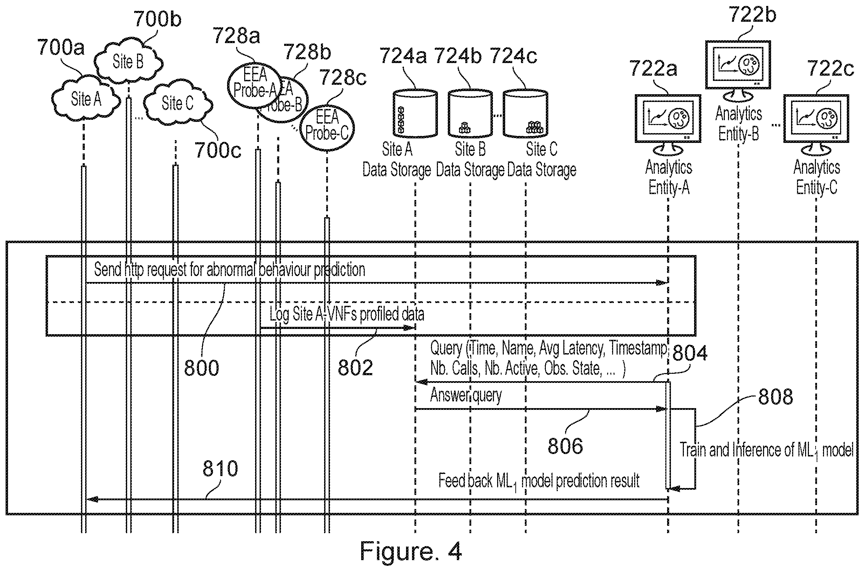

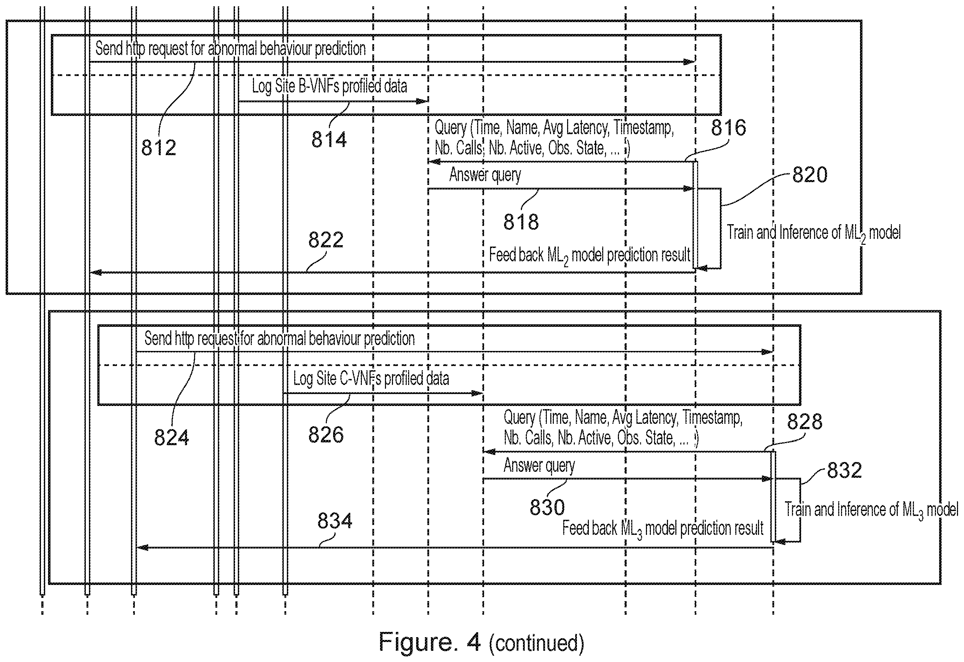

**Figure 4** is a signalling diagram illustrating an exchange of signals in the decentralized learning architecture, such as that illustrated in Figure 3. As illustrated by arrow 800 of Figure 4, a request (e.g. a hypertext transfer protocol, HTTP, request) for a prediction is transmitted from a first site 700a towards a local analytics entity 722a at the first site 700a. In the illustrated example, the request is for the prediction of abnormal behaviour. A first probe 728a monitors the VNFs 740a of the first site 700a to acquire data about the VNFs 740a of the first site 700a. As illustrated by arrow 802 of Figure 4, the first probe 728a transmits the acquired data towards a local memory 722a of the first site 700a. The acquired data is stored at the local memory 722a of the first site 700a. The steps illustrated by arrows 800 and 802 may be executed in parallel. As illustrated by arrow 804 of Figure 4, the local analytics entity 722a of the first site 700a queries the local memory 724a of the first site 700a for data about the VNFs 740a of the first site 700a. As illustrated by arrow 806 of Figure 4, the local memory 724a of the first site 700a transmits an answer to the query to the local analytics entity 722a of the first site 700a. As illustrated by arrow 808 of Figure 4, the local analytics entity 722a of the first site 700a trains a machine learning model based on the data about the VNFs 740a of the first site 700a, and uses the trained machine learning model to generate a prediction, which in this example is a prediction of abnormal behaviour. As illustrated by arrow 810 of Figure 4, the local analytics entity 722a of the first site 700a transmits (and thus feeds back) the machine learning model prediction towards the first site 700a.

As illustrated by arrow 812 of Figure 4, a request (e.g. a hypertext transfer protocol, HTTP, request) for a prediction is transmitted from a second site 700b towards a local analytics entity 722b at the second site 700b. In the illustrated example, the request is for the prediction of abnormal behaviour. A second probe 728b monitors the VNFs 740b of the second site 700b to acquire data about the VNFs 740b of the second site 700b. As illustrated by arrow 814 of Figure 4, the second probe 728b transmits the acquired data towards a local memory 722b of the second site 700b. The acquired data is stored at the local memory 722b of the second site 700b. The steps illustrated by arrows 812 and 814 may be executed in parallel. As illustrated by arrow 816 of Figure 4, the local analytics entity 722b of the second site 700b queries the local memory 724b of the second site 700b for data about the VNFs 740b of the second site 700b. As illustrated by arrow 818 of Figure 4, the local memory 724b of the second site 700b transmits an answer to the query to the local analytics entity 722b of the second site 700b. As illustrated by arrow 820 of Figure 4, the local analytics entity 722b of the second site 700b trains a machine learning model based on the data about the VNFs 740b of the second site 700b, and uses the trained machine learning model to generate a prediction, which in this example is a prediction of abnormal behaviour. As illustrated by arrow 822 of Figure 4, the local analytics entity 722b of the second site 700b transmits (and thus feeds back) the machine learning model prediction towards the second site 700b.

As illustrated by arrow 824 of Figure 4, a request (e.g. a hypertext transfer protocol, HTTP, request) for a prediction is transmitted from a third site 700c towards a local analytics entity 722c at the third site 700c. In the illustrated example, the request is for the prediction of abnormal behaviour. A third probe 728c monitors the VNFs 740c of the third site 700c to acquire data about the VNFs 740c of the third site 700c. As illustrated by arrow 826 of Figure 4, the third probe 728c transmits the acquired data towards a local memory 722c of the third site 700c. The acquired data is stored at the local memory 722c of the third site 700c. The steps illustrated by arrows 824 and 826 may be executed in parallel. As illustrated by arrow 828 of Figure 4, the local analytics entity 722c of the third site 700c queries the local memory 724c of the third site 700c for data about the VNFs 740c of the third site 700c. As illustrated by arrow 830 of Figure 4, the local memory 724c of the third site 700c transmits an answer to the query to the local analytics entity 722c of the third site 700c. As illustrated by arrow 832 of Figure 4, the local analytics entity 722c of the third site 700c trains a machine learning model based on the data about the VNFs 740c of the third site 700c, and uses the trained machine learning model to generate a prediction, which in this example is a prediction of abnormal behaviour. As illustrated by arrow 834 of Figure 4, the local analytics entity 722c of the third site 700c transmits (and thus feeds back) the machine learning model prediction towards the third site 700c.

At first sight, the decentralized learning described with reference to Figures 3 and 4 may be seen as an efficient practice for the analysis module in the CogNet standard mentioned earlier. However, the scale of a decision in such a case is restricted to insights at the local site and models that are learnt locally can be based on incomplete and/or biased statistics, which leads reduced accuracy.

Therefore, there are disadvantages associated with both the existing centralized learning architecture and the existing decentralized learning architecture.

### Summary

It is thus an object of the disclosure to obviate or eliminate at least some of the above-described disadvantages associated with existing techniques.

Therefore, according to an aspect of the disclosure, there is provided a method for generating a machine learning model. The method is performed by an entity. The method comprises, in response to receiving model parameters of a plurality of machine learning models, generating a machine learning model based on the model parameters of the plurality of machine learning models. Each of the plurality of machine learning models is trained by a different network node of a network functions virtualization (NFV) architecture based on data that is local to that network node.

In this way, an improved technique for generating a machine learning model is provided. As the machine learning models are trained locally at different network nodes, the machine learning models can be kept up to date with the most recent local data, which makes training the machine learning models efficient and effective. Also, as each network node trains its own machine learning model, the load on the network is shared and thus overloading of a single node/entity is avoided. Moreover, as it is the model parameters that are shared with the entity, the amount of data being transmitted over the network is limited to avoid latency issues and also the data itself can be kept secure and private. At the same time, the accuracy of the generated machine learning model is still improved, since the insights from a plurality of different network nodes are taken into account. Thus, the scale of a distributed system is leveraged, whilst suitable local machine learning models are trained and the insights of those local machine learning models are combined to generate a more accurate machine learning model. Moreover, the use of network nodes of an NFV architecture in the technique improves the scalability, portability, elasticity, and adaptability of the technique.

In some embodiments, the data may be about at least one virtualized network function (VNF) that is local to the network node.

In some embodiments, the at least one VNF may be hosted by one or more virtual machines and/or one or more containers.

In some embodiments, the entity may be a virtualized entity and/or one or more of the different network nodes may be virtualized network nodes.

In some embodiments, each of the plurality of machine learning models may be trained by a different network node of a group of network nodes.

In some embodiments, each network node of the group of network nodes may be local to a VNF that has at least one characteristic in common with a VNF that is local to another network node of the group of network nodes.

In some embodiments, the at least one characteristic may comprise any one or more of a traffic pattern, a number of subscribers, and a deployment environment.

In some embodiments, the method may comprise acquiring, from the different network nodes, the model parameters of the respective plurality of machine learning models.

In some embodiments, generating the machine learning model based on the model parameters of the plurality of machine learning models may comprise generating the machine learning model based on an average of the model parameters of the plurality of machine learning models.

In some embodiments, the method may comprise initiating transmission of model parameters of the generated machine learning model towards each of the different network nodes.

In some embodiments, the method may comprise initiating transmission of model parameters of a base machine learning model, wherein the base machine learning model may be the machine learning model that is trained by the different network nodes.

In some embodiments, the data may comprise data indicative of traffic in the NFV architecture.

According to another aspect of the disclosure, there is provided an entity configured to operate in accordance with the method described earlier in respect of the entity. The entity thus provides the advantages described earlier in respect of this method. In some embodiments, the entity may comprise processing circuitry configured to operate in accordance with the method described earlier in respect of the entity. In some embodiments, the entity may comprise at least one memory for storing instructions which, when executed by the processing circuitry, cause the entity to operate in accordance with the method described earlier in respect of the entity.

According to another aspect of the disclosure, there is provided a method for use in generating a machine learning model. The method is performed by a network node of a network functions virtualization (NFV) architecture. The method comprises training a machine learning model based on data that is local to the network node and initiating transmission of model parameters of the machine learning model towards an entity to allow the entity to generate a machine learning model based on the model parameters of a plurality of machine learning models. Each of the plurality of machine learning models is trained by a different network node based on data that is local to that network node. Thus, the advantages described earlier in respect of the method performed by the entity are provided.

In some embodiments, the data may be about at least one virtualized network function (VNF) that is local to the network node.

In some embodiments, the at least one VNF may be hosted by one or more virtual machines and/or one or more containers.

In some embodiments, the entity may be a virtualized entity and/or one or more of the different network nodes may be virtualized network nodes.

In some embodiments, the network node may be part of a group of network nodes and each of the plurality of machine learning models may be trained by a different network node of the group of network nodes.

In some embodiments, each network node of the group of network nodes may be local to a VNF that has at least one characteristic in common with a VNF that is local to another network node of the group of network nodes.

In some embodiments, the at least one characteristic may comprise any one or more of a traffic pattern, a number of subscribers, and a deployment environment.

In some embodiments, the method may comprise acquiring the data that is local to the network node.

In some embodiments, the data may be acquired from a probe configured to monitor data that is local to the network node and/or a memory configured to store the monitored data.

In some embodiments, the method may comprise receiving model parameters of the machine learning model generated by the entity.

In some embodiments, the method may comprise receiving, from the entity, model parameters of a base machine learning model, wherein training the machine learning model may comprise training the received base machine learning model.

In some embodiments, an operator data center of the network, an edge node of the network, a gateway of the network, or an end device of the network may comprise the network node.

In some embodiments, the data may comprise data indicative of traffic in the NFV architecture.

According to another aspect of the disclosure, there is provided a network node operable to perform the method described earlier in respect of the network node. The network node thus provides the advantages described earlier in respect of this method. In some embodiments, the network node comprises processing circuitry configured to operate in accordance with the method described earlier in respect of the network node. In some embodiments, the network node comprise at least one memory for storing instructions which, when executed by the processing circuitry, cause the network node to operate in accordance with the method described earlier in respect of the network node.

According to another aspect of the disclosure, there is provided a method performed by a system. The method comprises the method as described earlier in respect of the entity and the method as described earlier in respect of the network node. The method performed by the system thus provides the advantages described earlier in respect of the method performed by the entity and the network node.

According to another aspect of the disclosure, there is provided a system. The system comprises the entity as described earlier and at least one network node as described earlier. The system thus provides the advantages described earlier in respect of the method performed by the entity and the network node.

According to another aspect of the disclosure, there is provided a computer program comprising instructions which, when executed by processing circuitry, cause the processing circuitry to perform the method as described earlier in respect of the entity and/or the method as described earlier in respect of the network node. The computer program thus provides the advantages described earlier in respect of these methods.

According to another aspect of the disclosure, there is provided a computer program product, embodied on a non-transitory machine-readable medium, comprising instructions which are executable by processing circuitry to cause the processing circuitry to perform the method as described earlier in respect of the entity and/or the method as described earlier in respect of the network node. The computer program product thus provides the advantages described earlier in respect of these methods.

Thus, advantageous techniques for generating a machine learning model are provided.

### Brief description of the drawings

For a better understanding of the techniques, and to show how they may be put into effect, reference will now be made, by way of example, to the accompanying drawings, in which:
Figure 1 is a schematic illustrating an existing network architecture;
Figure 2 is a signalling diagram illustrating an exchange of signals in a network architecture according to an existing technique;
Figure 3 is a schematic illustrating an existing network architecture;
Figure 4 is a signalling diagram illustrating an exchange of signals in a network architecture according to an existing technique;
Figure 5 is a block diagram illustrating an entity according to an embodiment;
Figure 6 is a flowchart illustrating a method performed by an entity according to an embodiment;
Figure 7 is a block diagram illustrating a network node according to an embodiment;
Figure 8 is a flowchart illustrating a method performed by a network node according to an embodiment;
Figure 9 is a schematic illustrating a network architecture according to an embodiment;
Figure 10 is a schematic illustrating a network architecture according to an embodiment;
Figure 11 is a schematic illustrating a network architecture according to an embodiment;
Figure 12 is a signalling diagram illustrating an exchange of signals in a network architecture according to an embodiment;
Figure 13 is a schematic illustrating a network architecture according to an embodiment;
Figure 14 is a block diagram illustrating an entity according to an embodiment; and
Figure 15 is a block diagram illustrating a network node according to an embodiment.

### Detailed Description

As mentioned earlier, advantageous techniques for generating a machine learning model are described herein. The technique can be implemented by an entity, and at least one network node of a network functions virtualization (NFV) architecture. The network functions virtualization (NFV) architecture can be a fifth generation (5G) NFV architecture, or any other generation NFV architecture.

In the art, NFV is understood to involve the decoupling of network functions (NFs) from (e.g. proprietary) hardware. In the NFV architecture described herein, NFs can run as software in virtual machines (VMs) or containers. As such, the NFs themselves are virtual and can also be referred to herein as virtualized network functions (VNFs). The NFs referred to herein can be any type of NF, such as routing functions, traffic control functions, firewall functions, and/or any other type of network function.

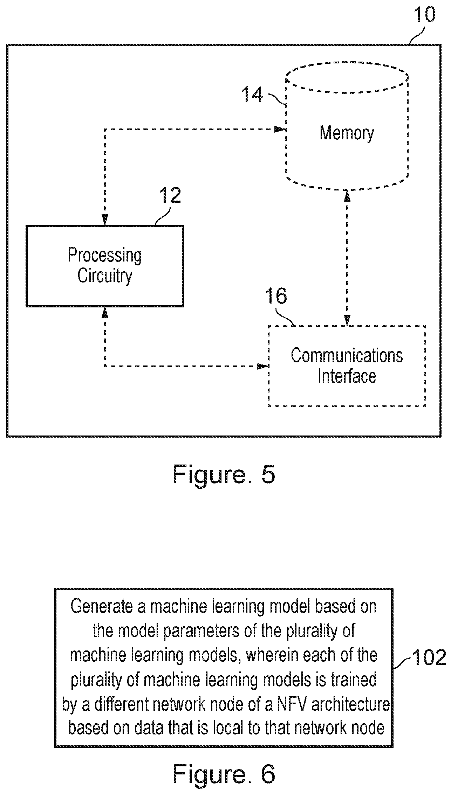

**Figure 5** illustrates the entity 10 in accordance with an embodiment. The entity 10 is for generating a machine learning model. The entity 10 may, for example, be a physical machine (e.g. a server) or a virtual machine (VM).

As illustrated in Figure 5, the entity 10 comprises processing circuitry (or logic) 12. The processing circuitry 12 controls the operation of the entity 10 and can implement the method described herein in respect of the entity 10. The processing circuitry 12 can be configured or programmed to control the entity 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the entity 10. In some embodiments, the processing circuitry 12 can be configured to run software to perform the method described herein in respect of the entity 10. The software may be containerised according to some embodiments. Thus, in some embodiments, the processing circuitry 12 may be configured to run a container to perform the method described herein in respect of the entity 10.

Briefly, the processing circuitry 12 of the entity 10 is configured to, in response to receiving model parameters of a plurality of machine learning models, generate a machine learning model based on the model parameters of the plurality of machine learning models. Each of the plurality of machine learning models is trained by a different network node of a network functions virtualization (NFV) architecture based on data that is local to that network node.

As illustrated in Figure 5, in some embodiments, the entity 10 may optionally comprise a memory 14. The memory 14 of the entity 10 can comprise a volatile memory or a non-volatile memory. In some embodiments, the memory 14 of the entity 10 may comprise a non-transitory media. Examples of the memory 14 of the entity 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the entity 10 can be connected to the memory 14 of the entity 10. In some embodiments, the memory 14 of the entity 10 may be for storing program code or instructions which, when executed by the processing circuitry 12 of the entity 10, cause the entity 10 to operate in the manner described herein in respect of the entity 10. For example, in some embodiments, the memory 14 of the entity 10 may be configured to store program code or instructions that can be executed by the processing circuitry 12 of the entity 10 to cause the entity 10 to operate in accordance with the method described herein in respect of the entity 10. Alternatively or in addition, the memory 14 of the entity 10 can be configured to store any information, data, messages, requests, responses, indications, notifications, signals, or similar, that are described herein. The processing circuitry 12 of the entity 10 may be configured to control the memory 14 of the entity 10 to store information, data, messages, requests, responses, indications, notifications, signals, or similar, that are described herein.

In some embodiments, as illustrated in Figure 5, the entity 10 may optionally comprise a communications interface 16. The communications interface 16 of the entity 10 can be connected to the processing circuitry 12 of the entity 10 and/or the memory 14 of entity 10. The communications interface 16 of the entity 10 may be operable to allow the processing circuitry 12 of the entity 10 to communicate with the memory 14 of the entity 10 and/or vice versa. Similarly, the communications interface 16 of the entity 10 may be operable to allow the processing circuitry 12 of the entity 10 to communicate with any one or more network nodes and/or any other node described herein. The communications interface 16 of the entity 10 can be configured to transmit and/or receive information, data, messages, requests, responses, indications, notifications, signals, or similar, that are described herein. In some embodiments, the processing circuitry 12 of the entity 10 may be configured to control the communications interface 16 of the entity 10 to transmit and/or receive information, data, messages, requests, responses, indications, notifications, signals, or similar, that are described herein.

Although the entity 10 is illustrated in Figure 5 as comprising a single memory 14, it will be appreciated that the entity 10 may comprise at least one memory (i.e. a single memory or a plurality of memories) 14 that operate in the manner described herein. Similarly, although the entity 10 is illustrated in Figure 5 as comprising a single communications interface 16, it will be appreciated that the entity 10 may comprise at least one communications interface (i.e. a single communications interface or a plurality of communications interface) 16 that operate in the manner described herein. It will also be appreciated that Figure 5 only shows the components required to illustrate an embodiment of the entity 10 and, in practical implementations, the entity 10 may comprise additional or alternative components to those shown.

**Figure** 6 is a flowchart illustrating a method performed by the entity 10 in accordance with an embodiment. The method is for generating a machine learning model. The entity 10 described earlier with reference to Figure 5 is configured to operate in accordance with the method of Figure 6. The method can be performed by or under the control of the processing circuitry 12 of the entity 10.

Although not illustrated in Figure 6, in some embodiments, the method may comprise initiating transmission of model parameters of a base machine learning model. More specifically, the processing circuitry 12 of the entity 10 can be configured to initiate transmission of the model parameters of the base machine learning model. Herein, the term "initiate" can mean, for example, cause or establish. Thus, the processing circuitry 12 of the entity 10 can be configured to itself transmit the model parameters of the base machine learning model (e.g. via a communications interface 16 of the entity 10) or can be configured to cause another node to transmit the model parameters of the base machine learning model. The base machine learning model may be a machine learning model that can be trained by different network nodes 20a, 20b, 20c.

Although also not illustrated in Figure 6, in some embodiments, the method may comprise acquiring, from the different network nodes 20a, 20b, 20c, model parameters of a respective plurality of machine learning models. More specifically, the processing circuitry 12 of the entity 10 can be configured to acquire (e.g. via the communications interface 16 of the entity 10) the model parameters according to some embodiments.

With reference to Figure 6, as illustrated at block 102, in response to receiving model parameters of a plurality of machine learning models, a machine learning model is generated (or built) based on the model parameters of the plurality of machine learning models. More specifically, the processing circuitry 12 of the entity 10 can generate the machine learning model based on the model parameters of the plurality of machine learning models according to some embodiments. Thus, the model parameters of the plurality of machine learning models can be aggregated to generate the machine learning model. For example, in some embodiments, generating the machine learning model based on the model parameters of the plurality of machine learning models may comprise generating the machine learning model based on an average of the model parameters of the plurality of machine learning models. Each of the plurality of machine learning models is trained by a different network node of a network functions virtualization (NFV) architecture based on data that is local to that network node.

In some embodiments, the data may be about at least one virtualized network function (VNF) that is local to the network node 20a, 20b, 20c. In some embodiments, the at least one VNF may be hosted by one or more virtual machines and/or one or more containers. In some embodiments, the entity 10 may itself be a virtualized entity and/or one or more of the different network nodes 20a, 20b, 20c may be virtualized network nodes. In some embodiments, the data may comprise data indicative of traffic in the NFV architecture and/or any other data.

In some embodiments, each of the plurality of machine learning models may be trained by a different network node 20a, 20b of a group (or cluster) of network nodes. In some embodiments, each network node 20a of the group of network nodes may be local to a VNF that has at least one characteristic in common with a VNF that is local to another network node 20b of the group of network nodes. In some embodiments, the at least one characteristic may comprise any one or more of a traffic pattern, a number of subscribers, and a deployment environment. The grouping (or clustering) described herein can ensure higher performing machine learning models.

Although not illustrated in Figure 6, in some embodiments, the method may comprise initiating transmission of model parameters of the generated machine learning model towards each of the different network nodes 20a, 20b, 20c. More specifically, the processing circuitry 12 of the entity 10 can be configured to initiate transmission of the model parameters of the generated machine learning model according to some embodiments. As mentioned earlier, the term "initiate" can mean, for example, cause or establish. Thus, the processing circuitry 12 of the entity 10 can be configured to itself transmit the model parameters (e.g. via a communications interface 16 of the entity 10) or can be configured to cause another node to transmit the model parameters. In some embodiments, only the model parameters (and not the raw data) is shared with the different network nodes 20a, 20b, 20c, which ensures the security and the privacy of the data.

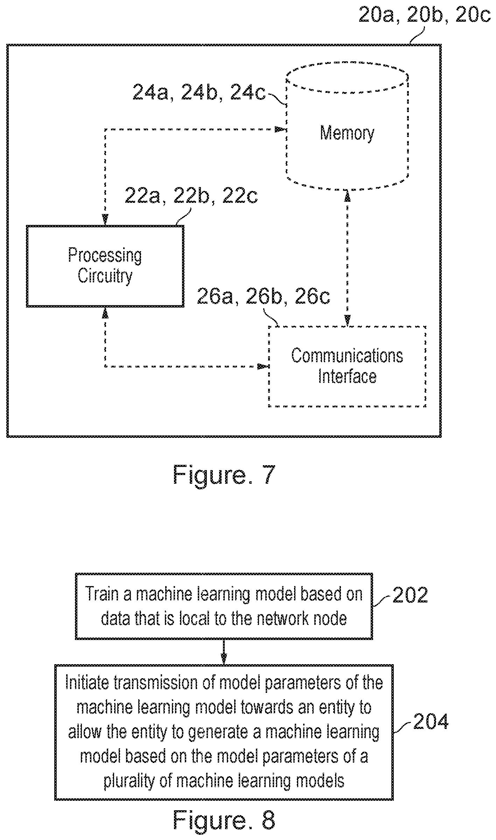

**Figure 7** illustrates the network node 20a, 20b, 20c of a network functions virtualization (NFV) architecture in accordance with an embodiment. The network node 20a, 20b, 20c is for use in generating a machine learning model. The network node 20a, 20b, 20c may, for example, be a physical machine (e.g. a server) or a virtual machine (VM). In some embodiments, an operator data center of the network, an edge node of the network, a gateway of the network, or an end device of the network may comprise the network node 20a, 20b, 20c. In other embodiments, the network node 20a, 20b, 20c may be a standalone network node.

As illustrated in Figure 7, the network node 20a, 20b, 20c comprises processing circuitry (or logic) 22a, 22b, 22c. The processing circuitry 22a, 22b, 22c controls the operation of the network node 20a, 20b, 20c and can implement the method described herein in respect of the network node 20a, 20b, 20c. The processing circuitry 22a, 22b, 22c can be configured or programmed to control the network node 20a, 20b, 20c in the manner described herein. The processing circuitry 22a, 22b, 22c can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the network node 20a, 20b, 20c. In some embodiments, the processing circuitry 22a, 22b, 22c can be configured to run software to perform the method described herein in respect of the network node 20a, 20b, 20c. The software may be containerised according to some embodiments. In some embodiments, the software may be a software update for the network node 20a, 20b, 20c. Thus, in some embodiments, the processing circuitry 22a, 22b, 22c may be configured to run a container to perform the method described herein in respect of the network node 20a, 20b, 20c.

Briefly, the processing circuitry 22a, 22b, 22c of the entity 10 is configured to train a machine learning model based on data that is local to the network node and initiate transmission of model parameters of the machine learning model towards an entity to allow the entity to generate a machine learning model based on the model parameters of a plurality of machine learning models. Each of the plurality of machine learning models is trained by a different network node based on data that is local to that network node.

As illustrated in Figure 7, in some embodiments, the network node 20a, 20b, 20c may optionally comprise a memory 24a, 24b, 24c. The memory 24a, 24b, 24c of the network node 20a, 20b, 20c can comprise a volatile memory or a non-volatile memory. In some embodiments, the memory 24a, 24b, 24c of the network node 20a, 20b, 20c may comprise a non-transitory media. Examples of the memory 24a, 24b, 24c of the network node 20a, 20b, 20c include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22a, 22b, 22c of the network node 20a, 20b, 20c can be connected to the memory 24a, 24b, 24c of the network node 20a, 20b, 20c. In some embodiments, the memory 24a, 24b, 24c of the network node 20a, 20b, 20c may be for storing program code or instructions which, when executed by the processing circuitry 22a, 22b, 22c of the network node 20a, 20b, 20c, cause the network node 20a, 20b, 20c to operate in the manner described herein in respect of the network node 20a, 20b, 20c.

For example, in some embodiments, the memory 24a, 24b, 24c of the network node 20a, 20b, 20c may be configured to store program code or instructions that can be executed by the processing circuitry 22a, 22b, 22c of the network node 20a, 20b, 20c to cause the network node 20a, 20b, 20c to operate in accordance with the method described herein in respect of the network node 20a, 20b, 20c. Alternatively or in addition, the memory 24a, 24b, 24c of the network node 20a, 20b, 20c can be configured to store any information, data, messages, requests, responses, indications, notifications, signals, or similar, that are described herein. The processing circuitry 22a, 22b, 22c of the network node 20a, 20b, 20c may be configured to control the memory 24a, 24b, 24c of the network node 20a, 20b, 20c to store information, data, messages, requests, responses, indications, notifications, signals, or similar, that are described herein.

In some embodiments, as illustrated in Figure 7, the network node 20a, 20b, 20c may optionally comprise a communications interface 26a, 26b, 26c. The communications interface 26a, 26b, 26c of the network node 20a, 20b, 20c can be connected to the processing circuitry 22a, 22b, 22c of the network node 20a, 20b, 20c and/or the memory 24a, 24b, 24c of network node 20a, 20b, 20c. The communications interface 26a, 26b, 26c of the network node 20a, 20b, 20c may be operable to allow the processing circuitry 22a, 22b, 22c of the network node 20a, 20b, 20c to communicate with the memory 24a, 24b, 24c of the network node 20a, 20b, 20c and/or vice versa. Similarly, the communications interface 26a, 26b, 26c of the network node 20a, 20b, 20c may be operable to allow the processing circuitry 22a, 22b, 22c of the network node 20a, 20b, 20c to communicate with the entity 10, at least one other network node 20a, 20b, 20c, or any other node described herein. The communications interface 26a, 26b, 26c of the network node 20a, 20b, 20c can be configured to transmit and/or receive information, data, messages, requests, responses, indications, notifications, signals, or similar, that are described herein. In some embodiments, the processing circuitry 22a, 22b, 22c of the network node 20a, 20b, 20c may be configured to control the communications interface 26a, 26b, 26c of the network node 20a, 20b, 20c to transmit and/or receive information, data, messages, requests, responses, indications, notifications, signals, or similar, that are described herein.

Although the network node 20a, 20b, 20c is illustrated in Figure 7 as comprising a single memory 24a, 24b, 24c, it will be appreciated that the network node 20a, 20b, 20c may comprise at least one memory (i.e. a single memory or a plurality of memories) 24a, 24b, 24c that operate in the manner described herein. Similarly, although the network node 20a, 20b, 20c is illustrated in Figure 7 as comprising a single communications interface 26a, 26b, 26c, it will be appreciated that the network node 20a, 20b, 20c may comprise at least one communications interface (i.e. a single communications interface or a plurality of communications interface) 26a, 26b, 26c that operate in the manner described herein. It will also be appreciated that Figure 7 only shows the components required to illustrate an embodiment of the network node 20a, 20b, 20c and, in practical implementations, the network node 20a, 20b, 20c may comprise additional or alternative components to those shown.

**Figure** 8 is a flowchart illustrating a method performed by the network node 20a, 20b, 20c in accordance with an embodiment. The method is for use in generating a machine learning model. The network node 20a, 20b, 20c described earlier with reference to Figure 7 is configured to operate in accordance with the method of Figure 8. The method can be performed by or under the control of the processing circuitry 22a, 22b, 22c of the network node 20a, 20b, 20c.

Although not illustrated in Figure 8, in some embodiments, the method may comprise acquiring data that is local to the network node 20a, 20b, 20c. More specifically, the processing circuitry 22a, 22b, 22c of the network node 20a, 20b, 20c can be configured to acquire the data (e.g. via a communications interface 26a, 26b, 26c of the network node 20a, 20b, 20c) according to some embodiments. In some embodiments, the data may be acquired from a probe configured to monitor data that is local to the network node 20a, 20b, 20c and/or a memory (e.g. a memory 24a, 24b, 24c of the network node 20a, 20b, 20c, and/or another memory) configured to store the monitored data.

In some embodiments, the data may be about at least one virtualized network function (VNF) that is local to the network node 20a, 20b, 20c. In some embodiments, the at least one VNF may be hosted by one or more virtual machines and/or one or more containers. In some embodiments, the entity 10 may be a virtualized entity and/or one or more of the different network nodes 20a, 20b, 20c may be virtualized network nodes. In some embodiments, the data may comprise data indicative of traffic in the NFV architecture and/or any other data.

With reference to Figure 8, as illustrated at block 202 of Figure 8, a machine learning model is trained based on the data that is local to the network node 20a, 20b, 20c. More specifically, the processing circuitry 22a, 22b, 22c of the network node 20a, 20b, 20c can train the machine learning model in this way according to some embodiments. Although not illustrated in Figure 8, in some embodiments, the method may comprise receiving, from the entity 10, model parameters of a base machine learning model. More specifically, the processing circuitry 22a, 22b, 22c of the network node 20a, 20b, 20c can be configured to receive (e.g. via the communications interface 26a, 26b, 26c) the model parameters of the base machine learning model according to some embodiments. In these embodiments, training the machine learning model may comprise training the received base machine learning model.

As illustrated at block 204 of Figure 8, transmission of model parameters of the machine learning model is initiated towards an entity to allow the entity to generate a machine learning model based on the model parameters of a plurality of machine learning models. More specifically, the processing circuitry 22a, 22b, 22c of the network node 20a, 20b, 20c can initiate transmission of the model parameters according to some embodiments. As mentioned earlier, the term "initiate" can mean, for example, cause or establish. Thus, the processing circuitry 22a, 22b, 22c of the network node 20a, 20b, 20c can be configured to itself transmit the model parameters (e.g. via a communications interface 26a, 26b, 26c of the network node 20a, 20b, 20c) or can be configured to cause another node to transmit the model parameters. Each of the plurality of machine learning models is trained by a different network node 20a, 20b, 20c based on data that is local to that network node 20a, 20b, 20c. In some embodiments, only the model parameters (and not the raw data) is shared with the different network nodes 20a, 20b, 20c, which ensures the security and the privacy of the data.

In some embodiments, the network node 20a may be part of a group (or cluster) of network nodes 20a, 20b and each of the plurality of machine learning models may be trained by a different network node 20a, 20b of the group of network nodes. In some embodiments, each network node 20a of the group of network nodes may be local to a VNF that has at least one characteristic in common with a VNF that is local to another network node 20b of the group of network nodes. Thus, similar VNFs can be grouped together. In some embodiments, the at least one characteristic may comprise any one or more of a traffic pattern, a number of subscribers, a deployment environment, and/or any other characteristics.

Although not illustrated in Figure 8, in some embodiments, the method may comprise receiving model parameters of the machine learning model generated by the entity 10.

There is also provided a system comprising at least one entity 10 as described earlier with reference to Figures 5 and 6, and at least one network node 20a, 20b, 20c as described earlier with reference to Figures 7 and 8. In some embodiments, the system can itself be the network functions virtualization (NFV) architecture. Thus, in some embodiments, the NFV architecture may comprise at least one entity 10 as described earlier with reference to Figures 5 and 6, as well as at least one network node 20a, 20b, 20c as described earlier with reference to Figures 7 and 8.

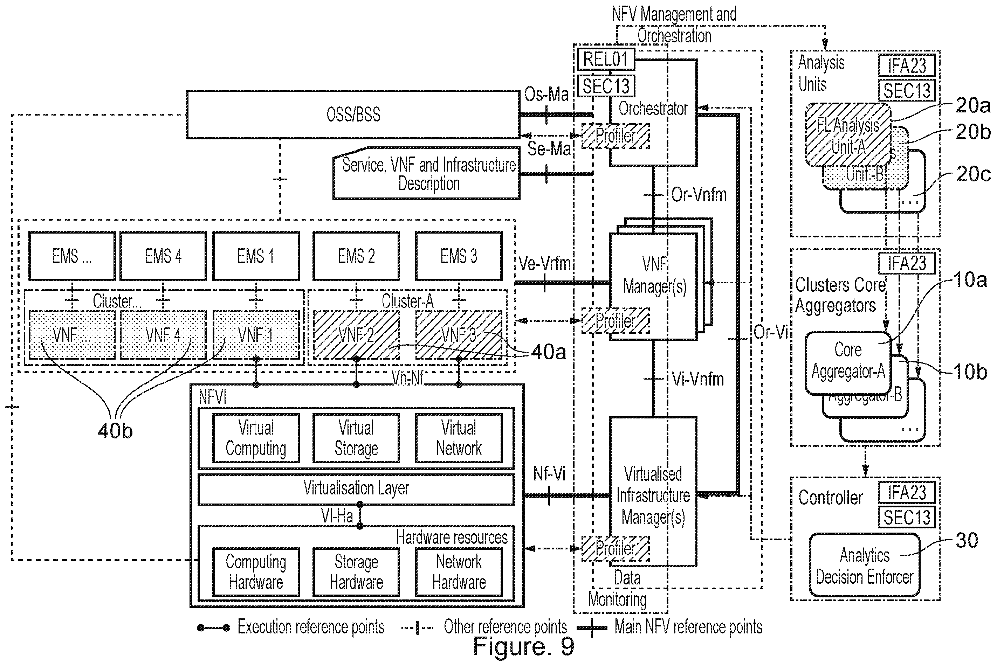

**Figure 9** illustrates such an NFV network architecture according to an embodiment. The NFV architecture comprises at least one entity 10a, 10b. One or more of the at least one entities 10a, 10b can be as described earlier with reference to Figures 5 and 6. Herein, such an entity 10a, 10b can also be referred to as an aggregator (or a federated learning, FL, aggregator), a (FL) core aggregator, or a (FL) clusters core aggregator. The NFV architecture comprises at least one network node 20a, 20b, 20c. One or more of the at least one network nodes 20a, 20b, 20c can be as described earlier with reference to Figures 7 and 8. Herein, such a network node 20a, 20b, 20c can also be referred to as an analysis unit, or a federated learning (FL) analysis unit. The at least one network node 20a, 20b, 20c can be distributed. The at least one network node 20a, 20b, 20c can coordinate with at least one entity 10a, 10b. Each of the at least one entity 10a, 10b is a central entity.

The at least one network node 20a, 20b, 20c can be configured to meet the current standards, e.g. ETSI GS NFV-REL 001, ETSI GS NFV-SEC 013, ETSI GR NFV-IFA 023, and CogNet standards. Data collection is widely assumed in NFV standards where ETSI GS NFV-REL 001 considers multiple monitoring interfaces and ETSI GS NFV-SEC 013 defines architecture for security monitoring. In some embodiments, the at least one entity 10a, 10b and the at least one network nodes 20a, 20b, 20c can be dedicated for the machine learning analysis described herein, which also aligns with ETSI GS NFV-SEC 013, which raises the need for analytic capacity through an NFV security monitoring analytics system. Each at least one network node 20a, 20b, 20c can be responsible for performing local analysis based on data that is local to that network node 20a, 20b, 20c, e.g. based on profiled on-site data (e.g. traffic data).

The NFV architecture comprises at least one virtualized network function (VNF) 40a, 40b. Each of the at least one VNFs is local to one of the at least one network nodes 20a, 20b. The VNFs can be grouped (or clustered) according to which network node 20a, 20b they are local. In some of these embodiments, there may be a different entity 10a, 10b for each group (or cluster) of VNFs 40a, 40b. Herein, local may mean located at the same site or node. In some embodiments, the NFV architecture may comprise one or more controllers, such as an analytics decision enforcer 30. The one or more controllers can be configured to comply with the policy engine in the CogNet standards. The one or more controllers can be configured to decide an action that is to be taken according to the data analysis described herein. In this context, ETSI GS NFV-SEC 013 defines an NFV security controller to manage security policies, while ETSI GR NFV-IFA 023 considers policy management in a MANO stack.

As illustrated in Figure 9, the NFV architecture can comprise an NFV infrastructure (NFVI). The NFVI can comprise one or more virtual resources (e.g. virtual computing, virtual storage, and/or a virtual network) and one or more hardware resources (e.g. computing hardware, storage hardware, and/or network hardware. The NFVI can comprise a virtualization layer. An interface (or reference point) VI-Ha can be between the virtualization layer and the one or more hardware components. One or more interfaces (or reference points) Vn-Nf can be between the NFVI and the at least one VNF 40a, 40b. The NFV architecture can comprise at least one element management system (EMS). One or more interfaces (or reference points) can be between the at least one EMS and the at least one VNF 40a, 40b.

The NFV architecture can comprise an operations support system and business support system (OSS/BSS). An interface (or reference point) can be between the OSS/BSS and the NFVI. An interface (or reference point) can be between the OSS/BSS and the EMS/VNF components. The NFV architecture can comprise an NFV management and orchestration (MANO) stack. The MANO stack can comprise an NFV orchestrator, one or more VNF managers, and one or more virtualized infrastructure managers. The one or more controllers (e.g. the analytics decision enforcer 30) can be configured to control any one or more of these MANO components. An interface (or reference point) can be between the one or more controllers and the MANO components. An interface (or reference point) can be between the MANO components and the at least one network node 20a, 20b, 20c. The at least one network node 20a, 20b, 20c can acquire data from the MANO components. The at least one entity 10a, 10b can acquire machine learning model parameters from one or more of the at least one network node 20a, 20b, 20c. The one or more controllers (e.g. the analytics decision enforcer 30) can acquire a generated machine learning model from one or more of the at least one entities 10a, 10b.

An interface (or reference point) Os-Ma can be between the MANO components and the OSS/BSS. An interface (or reference point) Se-Ma can be between the MANO components and a service, VNF and infrastructure description. An interface (or reference point) Ve-Vrfm can be between the one or more VNF managers and the EMS/VNF components. An interface (or reference point) Nf-Vi can be between the one or more virtualized infrastructure managers and the NFVI. An interface (or reference point) Or-Vnfm can be between the orchestrator and the one or more VNF managers. An interface (or reference point) Vi-Vnfm can be between the one or more VNF managers and the one or more virtualized infrastructure managers. An interface (or reference point) Or-Vi can be between the one or more virtualized infrastructure managers and the orchestrator.

In some embodiments, the NFV orchestrator can comprise a profiler. An interface (or reference point) can be between the profiler of the NFV orchestrator and the OSS/BSS. An interface (or reference) can be between the one or more VNF managers and the EMS/VNF components. In some embodiments, the one or more VNF managers can comprise a profiler. An interface can be located between the profiler of the one or more VNF managers and the EMS/VNF components. In some embodiments, the one or more virtualized infrastructure managers can comprise a profiler. An interface can be located between the profiler of the one or more virtualized infrastructure managers and the NFVI. In embodiments involving profilers, the profilers can be responsible for data monitoring according to some embodiments. Thus, in these embodiments, the at least one network node 20a, 20b, 20c can acquire data from the profilers. For example, at least one network node 20a, 20b may acquire, from the profiler of the one or more VNF managers, data about at least one VNF 40a, 40b that is local to that network node 20a, 20b according to some embodiments.

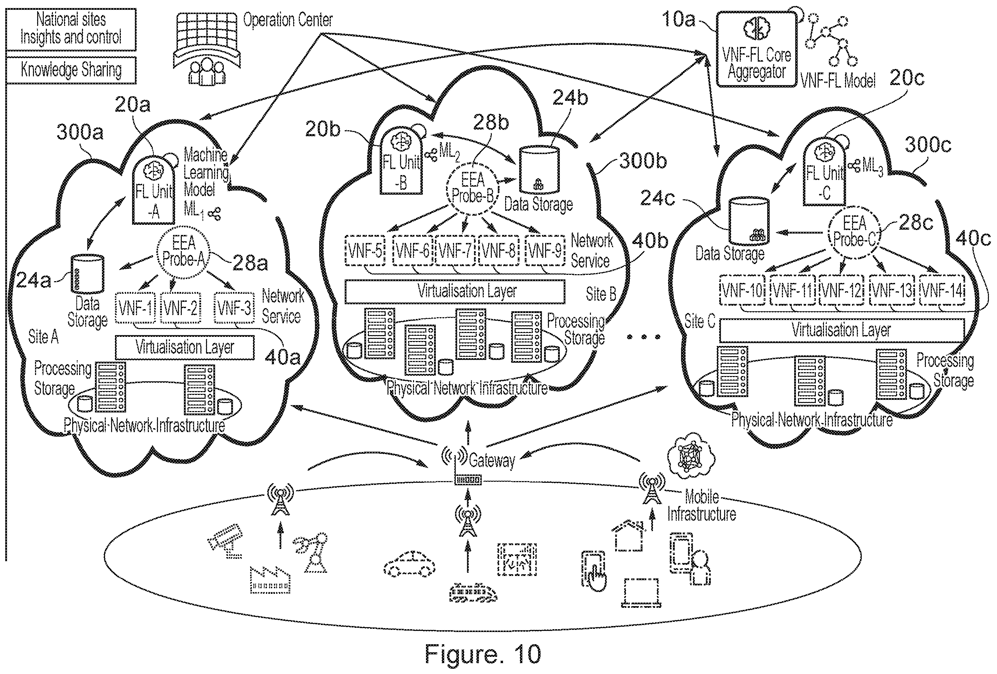

**Figure 10** illustrates an NFV architecture according to an embodiment. As illustrated in Figure 10, a use case for which the NFV architecture can be used is a smart city. However, it will be understood that other use cases are also applicable and a smart city is purely illustrated as one of many examples. As illustrated in Figure 10, the NFV architecture comprises a plurality of sites 300a, 300b, 300c.

The NFV architecture comprises a plurality of network nodes 20a, 20b, 20c. Any one or more of the plurality of network nodes 20a, 20b, 20c can be as described earlier with reference to Figures 7 and 8. Each site 300a, 300b, 300c comprises at least one of the plurality of network nodes 20a, 20b, 20c. Thus, there is a network node 20a, 20b, 20c local to each site. The NFV architecture comprises a plurality of VNFs 40a, 40b, 40c. Each site 300a, 300b, 300c comprises at least one of the plurality of VNFs 40a, 40b, 40c. Thus, there is at least one VNF 40a, 40b, 40c that is local to each network node 20a, 20b, 20c. The NFV architecture comprises an entity 10a. The entity 10a can be as described earlier with reference to Figures 5 and 6. Thus, the entity 10a is responsible for generating a machine learning model for the plurality of network nodes 20a, 20b, 20c.

The NFV architecture comprises a plurality of probes (e.g. expert analytics, EEA, probes) 28a, 28b, 28c. Each site 300a, 300b, 300c comprises at least one of the plurality of probes 28a, 28b, 28c. Thus, there is at least one probe 28a, 28b, 28c that is local to each network node 20a, 20b, 20c. The at least one probe 28a, 28b, 28c can are distributed. Each at least one probe 28a, 28b, 28c can be configured to monitor data that is local to one of the plurality of network nodes 20a, 20b, 20c, such as data about at least one VNF 40a, 40b, 40c that is local to one of the plurality of network nodes 20a, 20b, 20c. The NFV architecture comprises a plurality of memories 24a, 24b, 24c. Each site 300a, 300b, 300c comprises at least one of the plurality of memories 24a, 24b, 24c. Thus, there is at least one memories 24a, 24b, 24c that is local to each network node 20a, 20b, 20c. In some embodiments, such as that illustrated in Figure 10, a memory 24a, 24b, 24c may be external to a respective network node 20a, 20b, 20c. In other embodiments, the respective network node 20a, 20b, 20c may comprise the memory 24a, 24b, 24c. Each at least one probe 28a, 28b, 28c can be configured to store (or log) data at the memory 24a, 24b, 24c that is local to that probe 28a, 28b, 28c.

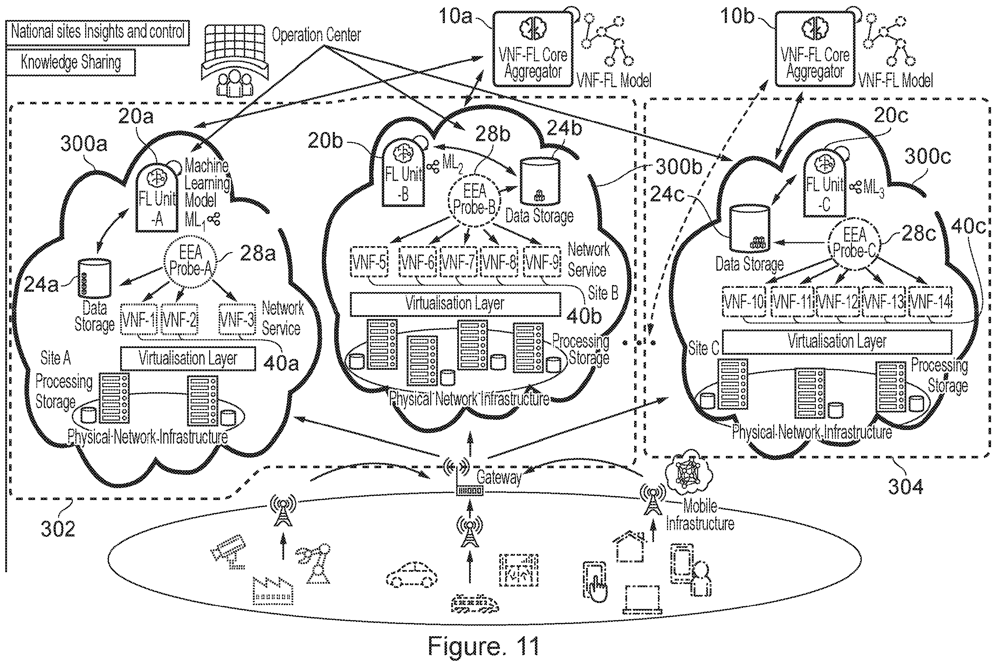

**Figure 11** illustrates an NFV architecture according to an embodiment. Generally, the NFV architecture illustrated in Figure 11 is the same as that illustrated in Figure 10 and the corresponding description will thus be understood to apply. However, in the embodiment illustrated in Figure 11, the NFV architecture comprises different groups 302, 304 of network nodes 20a, 20b, 20c. As illustrated in Figure 11, a network node 20a of a group 302 of network nodes can be local to a VNF 40a that has at least one characteristic in common with a VNF 40b that is local to another network node 20b of the group 302 of network nodes. Another difference between the NFV architecture illustrated in Figures 10 and 11 is that the NFV architecture illustrated in Figure 11 comprises a plurality of entities 10a, 10b. Each entity 10a, 10b can be responsible for generating a machine learning model for a different group 302, 304 of network nodes 20a, 20b, 20c.

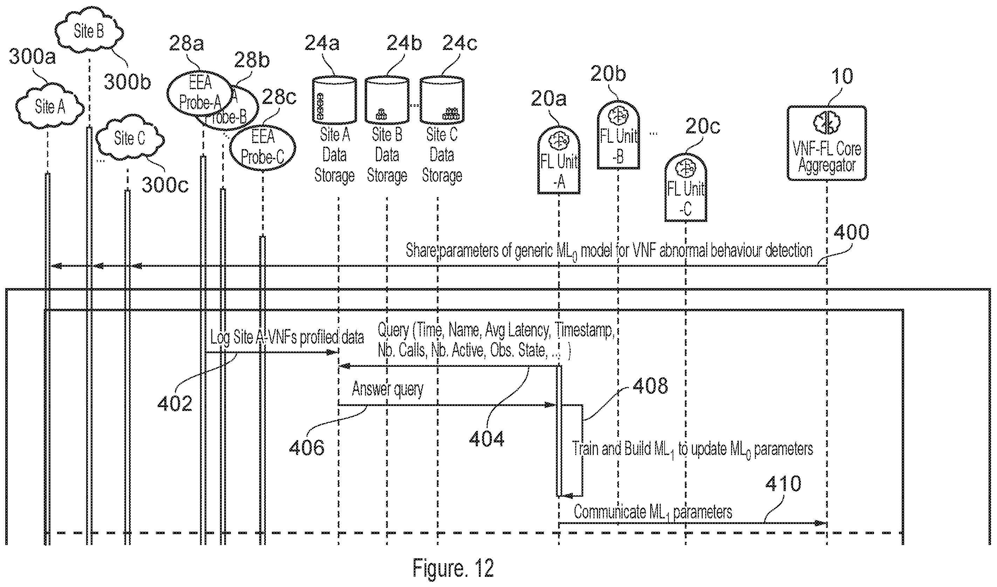

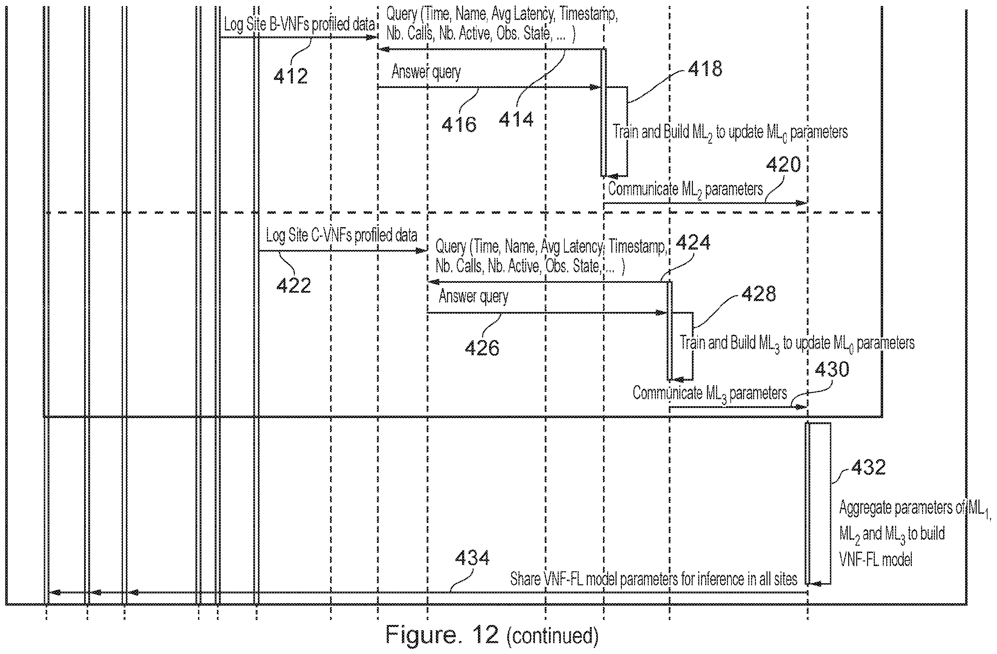

**Figure 12** is a signalling diagram illustrating an exchange of signals in a network architecture according to an embodiment. The network architecture is an NFV architecture. The NFV architecture can be as described earlier with reference to Figure 10 or 11. Thus, as illustrated in Figure 12, the NFV architecture comprises the plurality of sites 300a, 300b, 300c described earlier, the plurality of probes 28a, 28b, 28c described earlier, the plurality of memories 24a, 24b, 24c described earlier, the plurality of network nodes 20a, 20b, 20c described earlier, and an entity 10 as described earlier. The plurality of network nodes 20a, 20b, 20c are located at different ones of the plurality of sites 300a, 300b, 300c.

As illustrated by arrow 400 of Figure 12, the entity 10 may initiate transmission of model parameters of a base machine learning model M₀ towards the different sites 300a, 300b, 300c. The base machine learning model M₀ is a machine learning model that may be trained by the different network nodes 20a, 20b, 20c. The machine learning model can be for any use. For example, the machine learning model can be used to make a prediction, such as a prediction of abnormal behaviour of a VNF.

A probe of a first site 300a monitors data that is local to the first site 300a. As illustrated by arrow 402 of Figure 12, the probe 28a of the first site 300a initiates transmission of the (profiled) data that is local to the first site 300a towards a memory 24a at the first site 300a. The memory 24a at the first site 300a can store (or log) the data. As illustrated by arrows 404 and 406 of Figure 12, a first network node 20a at the first site 300a acquires the data that is local to the first network node 20a from the memory 24a at the first site 300a. In more detail, as illustrated by arrow 404 of Figure 12, the first network node 20a initiates transmission of a request for the data towards the memory 24a at the first site 300a. That is, the first network node 20a queries the data from the memory 24a at the first site 300a. The request can, for example, comprise a request for various properties relating to the data, such as time, name, average latency, timestamp, number of calls, number active, observation state, etc. As illustrated by arrow 406 of Figure 12, in response to the request, the first network node 20a receives the data from memory 24a at the first site 300a.

As illustrated by arrow 408 of Figure 12, the first network node 20a trains the base machine learning model M₀ based on the data that is local to the first network node 20a, which is the data that it received. The model can be trained for the specific use requested, e.g. abnormal behaviour prediction. As illustrated by arrow 410 of Figure 12, the first network node 20a initiates transmission of model parameters of the trained machine learning model M₁ towards the entity 10 to allow the entity 10 to generate a machine learning model based on the model parameters of a plurality of machine learning models.

A probe of a second site 300b monitors data that is local to the second site 300b. As illustrated by arrow 412 of Figure 12, the probe 28b of the second site 300b initiates transmission of the (profiled) data that is local to the second site 300b towards a memory 24b at the second site 300b. The memory 24b at the second site 300b can store (or log) the data. As illustrated by arrows 414 and 416 of Figure 12, a second network node 20b at the second site 300b acquires the data that is local to the second network node 20b from the memory 24b at the second site 300b. In more detail, as illustrated by arrow 414 of Figure 12, the second network node 20b initiates transmission of a request for the data towards the memory 24b at the second site 300b. That is, the second network node 20b queries the data from the memory 24b at the second site 300b. The request can, for example, comprise a request for various properties relating to the data, such as time, name, average latency, timestamp, number of calls, number active, observation state, etc. As illustrated by arrow 416 of Figure 12, in response to the request, the second network node 20b receives the data from memory 24b at the second site 300b.

As illustrated by arrow 418 of Figure 12, the second network node 20b trains the base machine learning model M₀ based on the data that is local to the second network node 20b, which is the data that it received. The model can be trained for the specific use requested, e.g. abnormal behaviour prediction. As illustrated by arrow 420 of Figure 12, the second network node 20b initiates transmission of model parameters of the trained machine learning model M₂ towards the entity 10 to allow the entity 10 to generate a machine learning model based on the model parameters of a plurality of machine learning models.

A probe of a third site 300c monitors data that is local to the third site 300c. As illustrated by arrow 422 of Figure 12, the probe 28c of the third site 300c initiates transmission of the (profiled) data that is local to the third site 300c towards a memory 24c at the third site 300c. The memory 24c at the third site 300c can store (or log) the data. As illustrated by arrows 424 and 426 of Figure 12, a third network node 20c at the third site 300c acquires the data that is local to the third network node 20c from the memory 24c at the third site 300c. In more detail, as illustrated by arrow 424 of Figure 12, the third network node 20c initiates transmission of a request for the data towards the memory 24c at the third site 300c. That is, the third network node 20c queries the data from the memory 24c at the third site 300c. The request can, for example, comprise a request for various properties relating to the data, such as time, name, average latency, timestamp, number of calls, number active, observation state, etc. As illustrated by arrow 426 of Figure 12, in response to the request, the third network node 20c receives the data from memory 24c at the third site 300c.

As illustrated by arrow 428 of Figure 12, the third network node 20c trains the base machine learning model M₀ based on the data that is local to the third network node 20c, which is the data that it received. The model can be trained for the specific use requested, e.g. abnormal behaviour prediction. As illustrated by arrow 430 of Figure 12, the third network node 20c initiates transmission of model parameters of the trained machine learning model M₃ towards the entity 10 to allow the entity 10 to generate a machine learning model based on the model parameters of a plurality of machine learning models.

In some embodiments, the steps illustrated by arrows 402-410 of Figure 12, the steps illustrated by arrows 412-420 of Figure 12, and/or the steps illustrated by arrows 422-430 of Figure 12 can be executed in parallel. Although the method is performed by three different network nodes 20a, 20b, 20c in the illustrated embodiment, it will be understood that at least two (e.g. two, three, or more than three) different network nodes may perform the method according to some embodiments.

As illustrated by arrow 432 of Figure 12, in response to receiving model parameters of a plurality of machine learning models (as illustrated by arrows 410, 420, and 430 of Figure 12), the entity 10 generates (or builds) a machine learning model based on the model parameters of the plurality of machine learning models M₁, M₂, M₃. Each of the plurality of machine learning models is trained by a different network node 20a, 20b, 20c of the NFV architecture based on data that is local to that network node 20a, 20b, 20c. Thus, the entity 10 aggregates the parameters of the plurality of machine learning models M₁, M₂, M₃ to generate the machine learning model. In some embodiments, the steps illustrated by arrows 402-432 of Figure 12 may continue to executed until convergence of the machine learning model.

As illustrated by arrow 434 of Figure 12, the entity 10 may initiate transmission of model parameters of the generated machine learning model towards each of the different network nodes 20a, 20b, 20c at the different sites 300a, 300b, 300c.

In an embodiment involving one or more groups (or clusters) 302, 304 of network nodes 20a, 20b, 20c (such as the embodiment illustrated in Figure 11), the same method applies, except that each group 302, 304 of network nodes 20a, 20b, 20c communicates with its own entity 10. As such, the machine learning model generated by each entity 10 is shared with the group of network nodes 20a, 20b, 20c linked to that entity 10 and not with network nodes 20a, 20b, 20c from other groups 302, 304. By grouping (or clustering) the network nodes 20a, 20b, 20c in the manner described herein, the generated machine learning model can be more appropriate for a particular network node 20a, 20b, 20c. For example, VNFs can have different characteristics, which means that a machine learning model with high accuracy on one site may result in machine learning model output (e.g. detection) faults on other sites. This can be avoided by way of the grouping (or clustering) of network nodes 20a, 20b, 20c in the manner described herein.

Thus, as described herein, each network node 20a, 20b, 20c generates (or builds) its own machine learning model based on its local data (e.g. local traffic data). The data can, for example, be data from the same site at which the network node 20a, 20b, 20c is located, e.g. data about one or more VNFs at the same site as the network node 20a, 20b, 20c. Each network node 20a, 20b, 20c shares the model parameters of their trained machine learning model with an entity (which may be a single entity 10, or an entity for a group to which the network node 20a, 20b, 20c belongs). The entity can thus aggregate the model parameters to generate (or build) an enhanced machine learning model. The newly generated machine learning model can be shared with the relevant network node(s) 20a, 20b, 20c, thereby offering national site insights and control as well as knowledge fusion among sites.

In some embodiments, actions can be decided and optionally also taken based on predictions output by the generated machine learning model. The one or more controllers (e.g. the analytics decision enforcer 30) can be configured for this purpose according to some embodiments. That is, the one or more controllers (e.g. the analytics decision enforcer 30) can be configured to decide on an action to be taken based on predictions output by the generated machine learning model and optionally also configured to control one or more components in the NFV architecture to take these actions. The actions can, for example, be actions to improve the management of networks and/or applications.

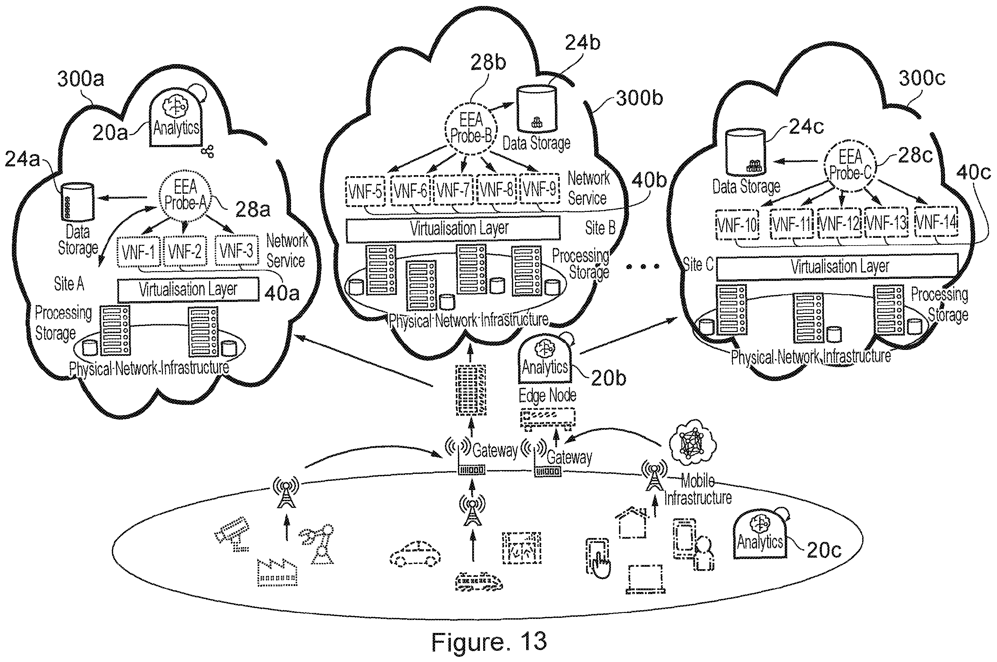

**Figure 13** illustrates an NFV architecture according to an embodiment. Generally, the NFV architecture illustrated in Figure 13 is the same as that illustrated in Figure 10 and the corresponding description will thus be understood to apply. However, the embodiment of Figure 13 illustrates a cloud implementation, which involves analytics offloading. That is, according to some embodiments, at least one of the plurality of network nodes 20a, 20b, 20c may be offloaded from its respective site 300a, 300b, 300c. For example, as illustrated in Figure 13, an operator data center of the network, an edge node of the network, a gateway of the network, and/or an end device of the network may comprise at least one of the plurality of network nodes 20a, 20b, 20c. In some embodiments, this offloading may be based on one or more factors, such as any one or more of resource availability, security and/or privacy policies, cost, latency, data size, time-scale, and/or any other factors.

By adopting a cloud native approach for the deployment of the machine learning described herein, the existing techniques can be further improved. For example, the ability to deploy distributed machine learning applications (e.g. as containers) and optionally also group (or cluster) them can offer several advantages. In particular, the machine learning applications can be self-contained according to some embodiments. For example, in some embodiments, the machine learning applications can be inside containers. The machine learning applications can thus operate in a highly distributed environment, such the cloud-native environment, and can even be placed close to the data that they analyse. Moreover, the ability to expose the services of machine learning systems that exist inside of containers (e.g. as microservices) allows external container-based applications to leverage those services at any time, without having to move the code inside the application.

The cloud-native approach for the deployment of the machine learning can also ensure the portability needed for containerized VNFs in a new cloud-native environment. Additionally, a containerized implementation of the entity 10 described herein and/or any one or more of the plurality of network nodes 20a, 20b, 20c described herein ensures that the entity and/or network node(s) can be shared among different containers without the need to reimplement them for each independently, which provides high scalability.

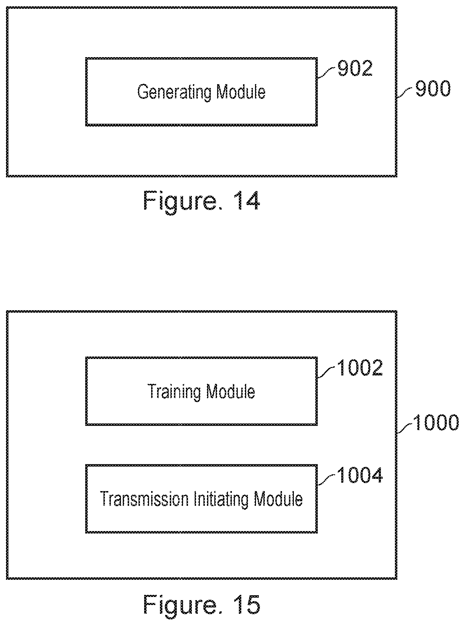

**Figure 14** is a block diagram illustrating an entity 900 in accordance with an embodiment. The entity 900 comprises a generating module 902 configured to, in response to receiving model parameters of a plurality of machine learning models, generate a machine learning model based on the model parameters of the plurality of machine learning models. Each of the plurality of machine learning models is trained by a different network node of a network functions virtualization (NFV) architecture based on data that is local to that network node. The entity 900 may operate in the manner described herein in respect of the entity.

**Figure 15** is a block diagram illustrating a network node 1000 in accordance with an embodiment. The network node 1000 comprises a training module 1002 configured to train a machine learning model based on data that is local to the network node. The network node 1000 comprises a transmission initiating module 1004 configured to initiate transmission of model parameters of the machine learning model towards an entity 900 to allow the entity 900 to generate a machine learning model based on the model parameters of a plurality of machine learning models. Each of the plurality of machine learning models is trained by a different network node based on data that is local to that network node. The network node 1000 may operate in the manner described herein in respect of the network node.

There is also provided a computer program comprising instructions which, when executed by processing circuitry (such as the processing circuitry 12 of the entity 10 described earlier and/or the processing circuitry 22a, 22b, 22c of the network node 20a, 20b, 20c described earlier), cause the processing circuitry to perform at least part of the method described herein. There is provided a computer program product, embodied on a non-transitory machine-readable medium, comprising instructions which are executable by processing circuitry (such as the processing circuitry 12 of the entity 10 described earlier and/or the processing circuitry 22a, 22b, 22c of the network node 20a, 20b, 20c described earlier) to cause the processing circuitry to perform at least part of the method described herein. There is provided a computer program product comprising a carrier containing instructions for causing processing circuitry (such as the processing circuitry 12 of the entity 10 described earlier and/or the processing circuitry 22a, 22b, 22c of the network node 20a, 20b, 20c described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the entity 10 functionality, the network node 20a, 20b, 20c functionality, and/or any other entity/node functionality described herein can be performed by hardware. Thus, in some embodiments, the entity 10, the network node 20a, 20b, 20c, and/or any other entity/node described herein can be a hardware entity/node. However, it will also be understood that optionally at least part or all of the entity 10 functionality, the network node 20a, 20b, 20c functionality, and/or any other entity/node functionality described herein can be virtualized. For example, the functions performed by the entity 10, the network node 20a, 20b, 20c, and/or any other entity/node described herein can be implemented in software running on generic hardware that is configured to orchestrate the entity/node functionality. Thus, in some embodiments, the entity 10, the network node 20a, 20b, 20c, and/or any other entity/node described herein can be a virtual entity/node. In some embodiments, at least part or all of the entity 10 functionality, the network node 20a, 20b, 20c functionality, and/or any other entity/node functionality described herein may be performed in a network enabled cloud. The entity 10 functionality, the network node 20a, 20b, 20c functionality, and/or any other entity/node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically.

Thus, in the manner described herein, there is advantageously provided techniques for generating a machine learning model. The technique provides a shift in the existing data analysis practice and implementation, e.g. for MANO with emphasis on 5G networks and applications management needs. The technique can ensure national site insights and control to improve network understanding. The technique also benefits from knowledge fusion in that sites join together in the analysis and building of machine learning models, which can improve policy management. The data is kept private and secure, which ensures GDPR compliance. Moreover, higher performing analytic models are provided, which can be particularly useful for smart and dynamic policy management. The technique is also advantageously portable and scalable. The technique can be implemented using the cloud-native technologies for better alignment with future developments in that field.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for generating a machine learning model, wherein the method is performed by an entity (10) and the method comprises:
in response to receiving (410, 420, 430) model parameters of a plurality of machine learning models:
generating (102, 432) a machine learning model based on the model parameters of the plurality of machine learning models,
wherein each of the plurality of machine learning models is trained by a different network node (20a, 20b, 20c) of a group (302) of network nodes of a network functions virtualization, NFV, architecture based on data that is local to that network node (20a, 20b, 20c), and
wherein each network node (20a) of the group (302) of network nodes is local to a virtualized network function, VNF (40a), that has at least one characteristic in common with a VNF (40b) that is local to another network node (20b) of the group (302) of network nodes.

2. A method as claimed in claim 1, wherein:
the data is about at least one VNF (40a, 40b, 40c) that is local to the network node (20a, 20b, 20c);
the entity (10) is a virtualized entity and/or one or more of the different network nodes (20a, 20b, 20c) are virtualized network nodes; and/or
the at least one characteristic comprises any one or more of a traffic pattern, a number of subscribers, and a deployment environment.

3. A method as claimed in claim 2, wherein:
the at least one VNF (40a, 40b, 40c) is hosted by one or more virtual machines and/or one or more containers.

4. A method as claimed in any of the preceding claims, the method comprising:
acquiring (410, 420, 430), from the different network nodes (20a, 20b, 20c), the model parameters of the respective plurality of machine learning models;
initiating (434) transmission of model parameters of the generated machine learning model towards each of the different network nodes (20a, 20b, 20c); and/or
initiating (400) transmission of model parameters of a base machine learning model, wherein the base machine learning model is the machine learning model that is trained by the different network nodes (20a, 20b, 20c).

5. A method as claimed in any of the preceding claims, wherein:
the data comprises data indicative of traffic in the NFV architecture; and/or
generating (102, 432) the machine learning model based on the model parameters of the plurality of machine learning models comprises generating the machine learning model based on an average of the model parameters of the plurality of machine learning models.

6. An entity (10) configured to operate in accordance with any of claims 1 to 5.

7. A method for use in generating a machine learning model, wherein the method is performed by a network node (20a, 20b, 20c) of a network functions virtualization, NFV, architecture and the method comprises:
training (408, 418, 428) a machine learning model based on data that is local to the network node (20a, 20b, 20c); and
initiating (202, 410, 420, 430) transmission of model parameters of the machine learning model towards an entity (10) to allow the entity (10) to generate a machine learning model based on the model parameters of a plurality of machine learning models,
wherein the network node (20a) is part of a group (302) of network nodes (20a, 20b) and each of the plurality of machine learning models is trained by a different network node (20a, 20b, 20c) of the group (302) of network nodes based on data that is local to that network node (20a, 20b, 20c), and
wherein each network node (20a) of the group (302) of network nodes is local to a virtualized network function, VNF (40a), that has at least one characteristic in common with a VNF (40b) that is local to another network node (20b) of the group (302) of network nodes.

8. A method as claimed in claim 7, wherein:
the data is about at least one VNF (40a, 40b, 40c) that is local to the network node (20a, 20b, 20c);
the entity (10) is a virtualized entity and/or one or more of the different network nodes (20a, 20b, 20c) are virtualized network nodes; and/or
the at least one characteristic comprises any one or more of a traffic pattern, a number of subscribers, and a deployment environment.

9. A method as claimed in claim 8, wherein:
the at least one VNF (40a, 40b, 40c) is hosted by one or more virtual machines and/or one or more containers.

10. A method as claimed in any of claims 7 to 9, the method comprising:
acquiring (404, 406, 414, 416, 424, 426) the data that is local to the network node (20a, 20b, 20c);
receiving (434) model parameters of the machine learning model generated by the entity (10); and/or
receiving (400), from the entity (10), model parameters of a base machine learning model, wherein training the machine learning model comprises training the received base machine learning model.

11. A method as claimed in any of claims 7 to 10, wherein:
an operator data center of the network, an edge node of the network, a gateway of the network, or an end device of the network comprises the network node (20a, 20b, 20c); and/or
the data comprises data indicative of traffic in the NFV architecture.

12. A network node (20a, 20b, 20c) operable to perform the method as claimed in any of claims 7 to 11.

13. A method performed by a system, the method comprising:
the method as claimed in any of claims 1 to 5; and
the method as claimed in any of claims 7 to 11.

14. A system comprising:
the entity (10) as claimed in claim 6; and
at least one network node (20a, 20b, 20c) as claimed in claim 12.

15. A computer program comprising instructions which, when executed by processing circuitry, cause the processing circuitry to perform the method according to any of claims 1 to 5 and/or any of claims 7 to 11.

## Patentansprüche

1. Ein Verfahren zum Erzeugen eines Maschinenlernmodells, wobei das Verfahren durch eine Entität (10) durchgeführt wird und das Verfahren Folgendes beinhaltet:
als Reaktion auf das Empfangen (410, 420, 430) von Modellparametern einer Vielzahl von Maschinenlernmodellen:
Erzeugen (102, 432) eines Maschinenlernmodells basierend auf den Modellparametern der Vielzahl von Maschinenlernmodellen,
wobei jedes der Vielzahl von Maschinenlernmodellen durch einen anderen Netzwerkknoten (20a, 20b, 20c) einer Gruppe (302) von Netzwerkknoten einer Netzwerkfunktionsvirtualisierungsarchitektur, NFV-Architektur, basierend auf Daten trainiert wird, die für diesen Netzwerkknoten (20a, 20b, 20c) lokal sind, und wobei jeder Netzwerkknoten (20a) der Gruppe (302) von Netzwerkknoten für eine virtualisierte Netzwerkfunktion, VNF (40a), lokal ist, die mindestens ein Charakteristikum mit einer VNF (40b) gemeinsam hat, die für einen anderen Netzwerkknoten (20b) der Gruppe (302) von Netzwerkknoten lokal ist.

2. Verfahren gemäß Anspruch 1, wobei:
die Daten über mindestens eine VNF (40a, 40b, 40c) sind, die für den Netzwerkknoten (20a, 20b, 20c) lokal ist;
die Entität (10) eine virtualisierte Entität ist und/oder einer oder mehrere der verschiedenen Netzwerkknoten (20a, 20b, 20c) virtualisierte Netzwerkknoten sind; und/oder
das mindestens eine Charakteristikum eines oder mehrere von einem Verkehrsmuster, einer Anzahl von Teilnehmern und einer Einsatzumgebung beinhaltet.

3. Verfahren gemäß Anspruch 2, wobei:
die mindestens eine VNF (40a, 40b, 40c) durch eine oder mehrere virtuelle Maschinen und/oder einen oder mehrere Container gehostet wird.

4. Verfahren gemäß einem der vorhergehenden Ansprüche, wobei das Verfahren Folgendes beinhaltet:
Erfassen (410, 420, 430), von den verschiedenen Netzwerkknoten (20a, 20b, 20c), der Modellparameter der jeweiligen Vielzahl von Maschinenlernmodellen;
Initiieren (434) der Übertragung von Modellparametern des erzeugten Maschinenlernmodells an jeden der verschiedenen Netzwerkknoten (20a, 20b, 20c); und/oder
Initiieren (400) der Übertragung von Modellparametern eines Basis-Maschinenlernmodells, wobei das Basis-Maschinenlernmodell das Maschinenlernmodell ist, das durch die verschiedenen Netzwerkknoten (20a, 20b, 20c) trainiert wird.

5. Verfahren gemäß einem der vorhergehenden Ansprüche, wobei:
die Daten Daten beinhalten, die indikativ für Verkehr in der NFV-Architektur sind; und/oder
das Erzeugen (102, 432) des Maschinenlernmodells basierend auf den Modellparametern der Vielzahl von Maschinenlernmodellen das Erzeugen des Maschinenlernmodells basierend auf einem Durchschnitt der Modellparameter der Vielzahl von Maschinenlernmodellen beinhaltet.

6. Eine Entität (10), die konfiguriert ist, um gemäß einem der Ansprüche 1 bis 5 zu arbeiten.

7. Ein Verfahren zur Verwendung beim Erzeugen eines Maschinenlernmodells, wobei das Verfahren durch einen Netzwerkknoten (20a, 20b, 20c) einer Netzwerkfunktionsvirtualisierungsarchitektur, NFV-Architektur, durchgeführt wird und das Verfahren Folgendes beinhaltet:
Trainieren (408, 418, 428) eines Maschinenlernmodells basierend auf Daten, die für den Netzwerkknoten (20a, 20b, 20c) lokal sind; und
Initiieren (202, 410, 420, 430) der Übertragung von Modellparametern des Maschinenlernmodells an eine Entität (10), um es der Entität (10) zu ermöglichen, ein Maschinenlernmodell basierend auf den Modellparametern einer Vielzahl von Maschinenlernmodellen zu erzeugen,
wobei der Netzwerkknoten (20a) Teil einer Gruppe (302) von Netzwerkknoten (20a, 20b) ist und jedes der Vielzahl von Maschinenlernmodellen durch einen anderen Netzwerkknoten (20a, 20b, 20c) der Gruppe (302) von Netzwerkknoten basierend auf Daten trainiert wird, die für diesen Netzwerkknoten (20a, 20b, 20c) lokal sind, und
wobei jeder Netzwerkknoten (20a) der Gruppe (302) von Netzwerkknoten für eine virtualisierte Netzwerkfunktion, VNF (40a), lokal ist, die mindestens ein Charakteristikum mit einer VNF (40b) gemeinsam hat, die für einen anderen Netzwerkknoten (20b) der Gruppe (302) von Netzwerkknoten lokal ist.

8. Verfahren gemäß Anspruch 7, wobei:
die Daten über mindestens eine VNF (40a, 40b, 40c) sind, die für den Netzwerkknoten (20a, 20b, 20c) lokal ist;
die Entität (10) eine virtualisierte Entität ist und/oder einer oder mehrere der verschiedenen Netzwerkknoten (20a, 20b, 20c) virtualisierte Netzwerkknoten sind; und/oder
das mindestens eine Charakteristikum eines oder mehrere von einem Verkehrsmuster, einer Anzahl von Teilnehmern und einer Einsatzumgebung beinhaltet.

9. Verfahren gemäß Anspruch 8, wobei:
die mindestens eine VNF (40a, 40b, 40c) durch eine oder mehrere virtuelle Maschinen und/oder einen oder mehrere Container gehostet wird.

10. Verfahren gemäß einem der Ansprüche 7 bis 9, wobei das Verfahren Folgendes beinhaltet:
Erfassen (404, 406, 414, 416, 424, 426) der Daten, die für den Netzwerkknoten (20a, 20b, 20c) lokal sind;
Empfangen (434) von Modellparametern des durch die Entität (10) erzeugten Maschinenlernmodells; und/oder
Empfangen (400), von der Entität (10), von Modellparametern eines Basis-Maschinenlernmodells, wobei das Trainieren des Maschinenlernmodells das Trainieren des empfangenen Basis-Maschinenlernmodells beinhaltet.

11. Verfahren gemäß einem der Ansprüche 7 bis 10, wobei:
ein Betreiberdatenzentrum des Netzwerks, ein Randknoten des Netzwerks, ein Gateway des Netzwerks oder ein Endgerät des Netzwerks den Netzwerkknoten (20a, 20b, 20c) beinhaltet; und/oder
die Daten Daten beinhalten, die indikativ für Verkehr in der NFV-Architektur sind.

12. Ein Netzwerkknoten (20a, 20b, 20c), der betreibbar ist, um das Verfahren gemäß einem der Ansprüche 7 bis 11 durchzuführen.

13. Ein Verfahren, das durch ein System durchgeführt wird, wobei das Verfahren Folgendes beinhaltet:
das Verfahren gemäß einem der Ansprüche 1 bis 5; und
das Verfahren gemäß einem der Ansprüche 7 bis 11.

14. Ein System, das Folgendes beinhaltet:
die Entität (10) gemäß Anspruch 6; und
mindestens einen Netzwerkknoten (20a, 20b, 20c) gemäß Anspruch 12.

15. Ein Computerprogramm, das Anweisungen beinhaltet, die, wenn sie durch eine Verarbeitungsschaltung ausgeführt werden, die Verarbeitungsschaltung veranlassen, das Verfahren gemäß einem der Ansprüche 1 bis 5 und/oder einem der Ansprüche 7 bis 11 durchzuführen.

## Revendications

1. Un procédé destiné à la génération d'un modèle d'apprentissage machine, le procédé étant réalisé par une entité (10) et le procédé comprenant :
en réponse à la réception (410, 420, 430) de paramètres de modèle d'une pluralité de modèles d'apprentissage machine :
la génération (102, 432) d'un modèle d'apprentissage machine sur la base des paramètres de modèle de la pluralité de modèles d'apprentissage machine,
chaque modèle de la pluralité de modèles d'apprentissage machine étant entraîné par un nœud de réseau différent (20a, 20b, 20c) d'un groupe (302) de nœuds de réseau d'une architecture de virtualisation de fonctions réseau, NFV (*Network Functions Virtualization*), sur la base de données qui sont locales à ce nœud de réseau (20a, 20b, 20c), et
chaque nœud de réseau (20a) du groupe (302) de nœuds de réseau étant local à une fonction réseau virtualisée, VNF (*Virtualized Network Function*), (40a), qui a au moins une caractéristique en commun avec une VNF (40b) qui est locale à un autre nœud de réseau (20b) du groupe (302) de nœuds de réseau.

2. Un procédé tel que revendiqué dans la revendication 1, dans lequel :
les données concernent au moins une VNF (40a, 40b, 40c) qui est locale au nœud de réseau (20a, 20b, 20c) ;
l'entité (10) est une entité virtualisée et/ou un ou plusieurs des nœuds de réseau différents (20a, 20b, 20c) sont des nœuds de réseau virtualisés ; et/ou
l'au moins une caractéristique comprend un ou plusieurs éléments quelconques parmi un modèle de trafic, un nombre d'abonnés, et un environnement de déploiement.

3. Un procédé tel que revendiqué dans la revendication 2, dans lequel :
l'au moins une VNF (40a, 40b, 40c) est hébergée par une ou plusieurs machines virtuelles et/ou un ou plusieurs conteneurs.

4. Un procédé tel que revendiqué dans n'importe lesquelles des revendications précédentes, le procédé comprenant :
l'acquisition (410, 420, 430), auprès des nœuds de réseau différents (20a, 20b, 20c), des paramètres de modèle de la pluralité respective de modèles d'apprentissage machine ;
le lancement (434) d'une transmission de paramètres de modèle du modèle d'apprentissage machine généré à destination de chacun des nœuds de réseau différents (20a, 20b, 20c) ; et/ou
le lancement (400) d'une transmission de paramètres de modèle d'un modèle d'apprentissage machine de base, le modèle d'apprentissage machine de base étant le modèle d'apprentissage machine qui est entraîné par les nœuds de réseau différents (20a, 20b, 20c).

5. Un procédé tel que revendiqué dans n'importe lesquelles des revendications précédentes, dans lequel :
les données comprennent des données indicatives d'un trafic dans l'architecture NFV ; et/ou
la génération (102, 432) du modèle d'apprentissage machine sur la base des paramètres de modèle de la pluralité de modèles d'apprentissage machine comprend la génération du modèle d'apprentissage machine sur la base d'une moyenne des paramètres de modèle de la pluralité de modèles d'apprentissage machine.

6. Une entité (10) configurée pour fonctionner conformément à n'importe lesquelles des revendications 1 à 5.

7. Un procédé destiné à être utilisé dans la génération d'un modèle d'apprentissage machine, le procédé étant réalisé par un nœud de réseau (20a, 20b, 20c) d'une architecture de virtualisation de fonctions réseau, NFV, et le procédé comprenant :
l'entraînement (408, 418, 428) d'un modèle d'apprentissage machine sur la base de données qui sont locales au nœud de réseau (20a, 20b, 20c) ; et
le lancement (202, 410, 420, 430) d'une transmission de paramètres de modèle du modèle d'apprentissage machine à destination d'une entité (10) pour permettre à l'entité (10) de générer un modèle d'apprentissage machine sur la base des paramètres de modèle d'une pluralité de modèles d'apprentissage machine,
dans lequel le nœud de réseau (20a) fait partie d'un groupe (302) de nœuds de réseau (20a, 20b) et chaque modèle de la pluralité de modèles d'apprentissage machine est entraîné par un nœud de réseau différent (20a, 20b, 20c) du groupe (302) de nœuds de réseau sur la base de données qui sont locales à ce nœud de réseau (20a, 20b, 20c), et
dans lequel chaque nœud de réseau (20a) du groupe (302) de nœuds de réseau est local à une fonction réseau virtualisée, VNF, (40a), qui a au moins une caractéristique en commun avec une VNF (40b) qui est locale à un autre nœud de réseau (20b) du groupe (302) de nœuds de réseau.

8. Un procédé tel que revendiqué dans la revendication 7, dans lequel :
les données concernent au moins une VNF (40a, 40b, 40c) qui est locale au nœud de réseau (20a, 20b, 20c) ;
l'entité (10) est une entité virtualisée et/ou un ou plusieurs des nœuds de réseau différents (20a, 20b, 20c) sont des nœuds de réseau virtualisés ; et/ou
l'au moins une caractéristique comprend un ou plusieurs éléments quelconques parmi un modèle de trafic, un nombre d'abonnés, et un environnement de déploiement.

9. Un procédé tel que revendiqué dans la revendication 8, dans lequel :
l'au moins une VNF (40a, 40b, 40c) est hébergée par une ou plusieurs machines virtuelles et/ou un ou plusieurs conteneurs.

10. Un procédé tel que revendiqué dans n'importe lesquelles des revendications 7 à 9, le procédé comprenant :
l'acquisition (404, 406, 414, 416, 424, 426) des données qui sont locales au nœud de réseau (20a, 20b, 20c) ;
la réception (434) de paramètres de modèle du modèle d'apprentissage machine généré par l'entité (10) ; et/ou
la réception (400), en provenance de l'entité (10), de paramètres de modèle d'un modèle d'apprentissage machine de base, l'entraînement du modèle d'apprentissage machine comprenant l'entraînement du modèle d'apprentissage machine de base reçu.

11. Un procédé tel que revendiqué dans n'importe lesquelles des revendications 7 à 10, dans lequel :
un centre de données d'opérateur du réseau, un nœud périphérique du réseau, une passerelle du réseau, ou un dispositif terminal du réseau comprend le nœud de réseau (20a, 20b, 20c) ; et/ou
les données comprennent des données indicatives d'un trafic dans l'architecture NFV.

12. Un nœud de réseau (20a, 20b, 20c) pouvant fonctionner pour réaliser le procédé tel que revendiqué dans n'importe lesquelles des revendications 7 à 11.

13. Un procédé réalisé par un système, le procédé comprenant :
le procédé tel que revendiqué dans n'importe lesquelles des revendications 1 à 5 ; et
le procédé tel que revendiqué dans n'importe lesquelles des revendications 7 à 11.

14. Un système comprenant :
l'entité (10) telle que revendiquée dans la revendication 6 ; et
au moins un nœud de réseau (20a, 20b, 20c) tel que revendiqué dans la revendication 12.

15. Un programme informatique comprenant des instructions qui, lorsqu'elles sont exécutées par une circuiterie de traitement, amènent la circuiterie de traitement à réaliser le procédé selon n'importe lesquelles des revendications 1 à 5 et/ou n'importe lesquelles des revendications 7 à 11.
